(19) Europäisches Patentamt
European Patent Office
Office européen des brevets

(11) **EP 4 503 496 A1**

(12) **EUROPEAN PATENT APPLICATION**
published in accordance with Art. 153(4) EPC

(43) Date of publication:
**05.02.2025 Bulletin 2025/06**

(21) Application number: **23791075.7**

(22) Date of filing: **11.04.2023**

(51) International Patent Classification (IPC):
**H04L 5/00** (2006.01)    **H04W 36/00** (2009.01)

(52) Cooperative Patent Classification (CPC):
**H04L 5/00; H04W 36/00; H04W 56/00**

(86) International application number:
**PCT/CN2023/087497**

(87) International publication number:
**WO 2023/202420 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.04.2022 CN 202210412217**

(71) Applicant: **Huawei Technologies Co., Ltd.
Shenzhen, Guangdong 518129 (CN)**

(72) Inventors:
• **WANG, Ting
  Shenzhen, Guangdong 518129 (CN)**

• **LYU, Yongxia
  Shenzhen, Guangdong 518129 (CN)**
• **WEI, Dongdong
  Shenzhen, Guangdong 518129 (CN)**
• **MA, Jianglei
  Shenzhen, Guangdong 518129 (CN)**
• **ZHU, Peiying
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND RELATED APPARATUS**

(57) Embodiments of this application provide a communication method and a related apparatus. The method includes: obtaining mapping relationship information, where the mapping relationship information indicates a mapping relationship between at least one link and at least one group of timing values, and each group of timing values includes at least one transmit timing value and/or at least one receive timing value; determining, based on a scheduled target link and the mapping relationship information, a timing value corresponding to the target link; and performing communication through the target link based on the timing value. The preconfigured mapping relationship information is obtained, so that a timing value on a link after switching can be quickly determined, to help a device that performs communication through the link determine a time domain position for sending and/or receiving to be performed during the communication. Therefore, a link switching delay can be reduced.

300

Obtain mapping relationship information, where the mapping relationship information indicates a mapping relationship between at least one link and at least one group of timing values — 301

Determine, based on a scheduled target link and the mapping relationship information, a timing value corresponding to the target link — 302

Perform communication through the target link based on the timing value — 303

FIG. 3

## Description

This application claims priority to Chinese Patent Application No. 202210412217.8, filed with the China National Intellectual Property Administration on April 19, 2022 and entitled "COMMUNICATION METHOD AND RELATED APPARATUS", which is incorporated herein by reference in its entirety.

## TECHNICAL FIELD

This application relates to the communication field, and more specifically, to a communication method and a related apparatus.

## BACKGROUND

Currently, in a moving process, to meet a requirement for ultra-reliable low-latency communication (ultra-reliability low latency communication, URLLC), a communication device may frequently switch a communication link, for example, switch from a communication link of one type to a communication link of another type, or switch between a plurality of links of a same type.

However, after a link of a communication device is switched, a device that communicates with the communication device may change, and corresponding link propagation duration usually also changes. During communication through a link, the communication device needs to determine receive/transmit timing on the link. In this case, the communication device may need to receive a synchronization signal to perform uplink and downlink synchronization, to obtain the transmit and receive timing on the link. This may need to consume a long period of time. Consequently, a link switching delay is long, and even a service interruption occurs.

Therefore, how to resolve a problem of the long link switching delay becomes a technical problem to be urgently resolved.

## SUMMARY

This application provides a communication method and a related apparatus, to reduce a link switching delay.

According to a first aspect, this application provides a communication method. The method may be performed by a first communication device, may be performed by a component (for example, a chip or a chip system) configured in the first communication device, or may be implemented by a logical module or software that can implement all or a part of functions of the first communication device. This is not limited in this application.

The first communication device may be a network device, or may be a terminal device. This is not limited in this application.

For example, the method includes: obtaining mapping relationship information, where the mapping relationship information indicates a mapping relationship between at least one link and at least one group of timing values, and each group of timing values includes at least one transmit timing value and/or at least one receive timing value; determining, based on a scheduled target link and the mapping relationship information, a timing value corresponding to the target link; and performing communication through the target link based on the timing value.

The transmit timing value may be for determining a time domain position for sending, and the receive timing value may be for determining a time domain position for receiving.

It should be understood that each of the at least one link may correspond to one group of timing values, and each group of timing values may include the at least one transmit timing value and/or the at least one receive timing value. In other words, each link may correspond to at least one transmit timing value and/or at least one receive timing value.

Based on the foregoing technical content, the first communication device obtains the preconfigured mapping relationship information indicating the mapping relationship between the at least one link and the at least one group of timing values, to determine the corresponding timing value on the target link based on the scheduled target link and the mapping relationship information, so that the communication can be implemented on the target link based on the timing value. A timing value on each link is preconfigured, to be specific, before the first communication device accesses a link, a corresponding timing value has been configured for each link that may be accessed. Therefore, during inter-link switching, the first communication device does not need to obtain receive/transmit timing on the link through uplink and downlink synchronization, network scheduling, or the like when accessing the link. This can greatly reduce a switching delay, implement fast link switching and multi-link communication, improve communication performance, and meet more service requirements.

With reference to the first aspect, in some possible implementations of the first aspect, the obtaining mapping relationship information includes: receiving the mapping relationship information, or determining the mapping relationship information.

In other words, the mapping relationship information may be autonomously determined by the first communication device, or may be determined by another communication device (for example, a second communication device described below) and then sent to the first communication device. This is not limited in this application. For a process of configuring the mapping relationship information by the second communication device, refer to related descriptions in the second aspect. Details are not described herein.

With reference to the first aspect, in some possible implementations of the first aspect, the receiving the mapping relationship information includes: receiving higher-layer signaling, where the higher-layer signaling carries the mapping relationship information.

Based on the foregoing technical content, the first communication device may receive the mapping relationship information by using the higher-layer signaling, and then determine link information and a corresponding transmit timing value and/or a corresponding receive timing value. When performing communication through the target link, the first communication device may determine the timing value of the target link based on the mapping relationship information, to implement the fast link switching and the multi-link communication. The timing value may be semi-statically updated through configuration using the higher-layer signaling, to improve the communication performance.

In a possible case, the higher-layer signaling is scrambled by using a radio network temporary identifier (radio network temporary identity, RNTI) of the first communication device, and the first communication device is a device that performs communication through the target link.

In another possible case, the higher-layer signaling is scrambled by using an RNTI of a communication device group, and the communication device group includes a device that performs communication through any one of the at least one link.

In the foregoing two cases, the higher-layer signaling may be signaling sent for a specific communication device (for example, the first communication device) or signaling sent for one communication device group. The foregoing manners can improve signaling efficiency and reduce signaling overheads.

With reference to the first aspect, in some possible implementations of the first aspect, the receiving the mapping relationship information includes: receiving physical-layer signaling, where the physical-layer signaling carries the mapping relationship information.

Based on the foregoing technical content, the first communication device may receive the mapping relationship information by using the physical-layer signaling, and then determine link information and a corresponding transmit timing value and/or a corresponding receive timing value. When performing communication through the target link, the first communication device may determine the timing value of the target link based on the mapping relationship information, to implement the fast link switching and the multi-link communication. The timing value may be dynamically updated through configuration using the higher-layer signaling, to improve the communication performance.

By way of example and not limitation, the physical-layer signaling is transmission control information (transmission control information, TxCI), reception control information (reception control information, RxCI), or other scheduling information.

With reference to the first aspect, in some possible implementations of the first aspect, the mapping relationship information indicates a mapping relationship between a plurality of links and a plurality of groups of timing values.

It should be understood that the plurality of links may one-to-one correspond to the plurality of groups of timing values, and each link corresponds to one group of timing values. Alternatively, a plurality of links may correspond to one group of timing values. Alternatively, one link may correspond to a plurality of groups of timing values.

Based on the foregoing technical content, the first communication device may determine, by using the mapping relationship information, a plurality of pieces of link information and a transmit timing value and/or a receive timing value corresponding to each link. When performing communication through the target link, the first communication device may determine, based on the mapping relationship information, the timing value of the target link in the timing values corresponding to the plurality of links, to implement the fast link switching and the multi-link communication. In addition, the plurality of pieces of link information and the corresponding timing values are configured, so that signaling indication efficiency can be improved, and the timing values of the plurality of links can be determined more quickly, to reduce the delay and signaling overheads.

With reference to the first aspect, in some possible implementations of the first aspect, when the mapping relationship information indicates the at least one link, the mapping relationship information includes an index of the link and/or identifiers of a communication pair corresponding to the link, and the communication pair includes a sending device and a receiving device.

Based on the foregoing technical content, in a scenario in which the first communication device performs communication through a plurality of links, each link may be indicated by an index of the link or identifiers of a communication pair. The mapping relationship information may include a mapping relationship between an index of the at least one link and the at least one group of timing values or a mapping relationship between identifiers of at least one communication pair and the at least one group of timing values. When performing communication through the target link, the first communication device may determine the timing value of the target link based on the mapping relationship information, to implement the fast link switching and the multi-link communication.

With reference to the first aspect, in some possible implementations of the first aspect, when the mapping relationship information indicates the at least one group of timing values, the mapping relationship information includes at least one transmit timing value and/or at least one receive timing value.

Based on the foregoing technical content, in the scenario in which the first communication device performs communication through the plurality of links, the transmit timing value and/or the receive timing value may be directly indicated, so that the first communication device determines time domain positions for sending and/or receiving to be performed on different links, to implement the fast link switching and the multi-link communication.

With reference to the first aspect, in some possible implementations of the first aspect, when the mapping relationship information indicates the at least one group of timing values, the mapping relationship information includes an offset of each of at least one transmit timing value and/or at least one receive timing value relative to a timing value on a reference link.

Based on the foregoing technical content, in the scenario in which the first communication device performs communication through the plurality of links, the timing value may be indicated by the offset relative to the timing value on the reference link. This can reduce indication overheads, and implement the fast link switching and the multi-link communication.

With reference to the first aspect, in some possible implementations of the first aspect, the reference link is a link that has been synchronously accessed, and the reference link includes a link between a terminal device and a network device or a link between terminal devices.

Based on the foregoing technical content, in the scenario in which the first communication device performs communication through the plurality of links, when the timing value in the mapping relationship information is indicated, the offset relative to the timing value on the link that has been synchronously accessed may be indicated, and a synchronization signal does not need to be sent for the target link, to reduce signal overheads, reduce the delay, and implement the fast link switching and the multi-link communication.

With reference to the first aspect, in some possible implementations of the first aspect, the method further includes: obtaining the timing value on the reference link.

With reference to the first aspect, in some possible implementations of the first aspect, indication information that is in the mapping relationship information and that indicates the at least one group of timing values corresponds to a link type.

Based on the foregoing technical content, the indication information of the timing value corresponds to the link type, so that timing requirements for different link types can be met, and overheads for indicating the timing value can be reduced.

According to a second aspect, this application provides a communication method. The method may be performed by a second communication device, may be performed by a component (for example, a chip or a chip system) configured in the second communication device, or may be implemented by a logical module or software that can implement all or a part of functions of the second communication device. This is not limited in this application.

The second communication device may be a network device, or may be a terminal device. This is not limited in this application.

For example, the method includes: determining mapping relationship information, where the mapping relationship information indicates a mapping relationship between at least one link and at least one group of timing values, and each group of timing values includes at least one transmit timing value and/or at least one receive timing value; and sending the mapping relationship information.

Based on the foregoing technical content, the second communication device determines, in advance for another communication device (for example, the first communication device described above), the mapping relationship information indicating the mapping relationship between the at least one link and the at least one group of timing values. When a new link is scheduled, the another communication device may determine a corresponding timing value based on the mapping relationship information, to implement communication on the new link based on the timing value. A timing value on each link is preconfigured, to be specific, before the another communication device accesses a link, the second communication device has configured a corresponding timing value for each link that may be accessed by the another communication device. Therefore, during inter-link switching, the another communication device does not need to obtain receive/transmit timing on the link through uplink and downlink synchronization, network scheduling, or the like when accessing the link. This can greatly reduce a switching delay, implement fast link switching and multi-link communication, improve communication performance, and meet more service requirements.

With reference to the second aspect, in some possible implementations of the second aspect, the mapping relationship information is carried in higher-layer signaling.

Based on the foregoing technical content, the first communication device may receive the mapping relationship information by using the higher-layer signaling, and then determine link information and a corresponding transmit timing value and/or a corresponding receive timing value. When performing communication through a target link, the first communication device may determine a timing value of the target link based on the mapping relationship information, to implement the fast link switching and the multi-link communication. The timing value may be semi-statically updated through configuration using the higher-layer signaling, to improve the communication performance.

In a possible case, the higher-layer signaling is scrambled by using an RNTI of a communication device, and the communication device is a device that performs communication through the target link. In another possible case, the higher-layer signaling is scrambled by using an RNTI of a communication device group, and the communication device group includes a device that performs communication through any one of the at least one link.

In the foregoing two cases, the higher-layer signaling may be signaling sent for a specific communication device (for example, the first communication device described above) or signaling sent for one communication device group. The foregoing manners can improve signaling efficiency and reduce signaling overheads.

With reference to the second aspect, in some possible implementations of the second aspect, the mapping relationship information is carried in physical-layer signaling.

Based on the foregoing technical content, the first communication device may receive the mapping relationship information by using the physical-layer signaling, and then determine link information and a corresponding transmit timing value and/or a corresponding receive timing value. When performing communication through a target link, the first communication device may determine a timing value of the target link based on the mapping relationship information, to implement the fast link switching and the multi-link communication. The timing value may be dynamically updated through configuration using the higher-layer signaling, to improve the communication performance.

With reference to the second aspect, in some possible implementations of the second aspect, the mapping relationship information indicates a mapping relationship between a plurality of links and a plurality of groups of timing values.

It should be understood that the plurality of links may one-to-one correspond to the plurality of groups of timing values, and each link corresponds to one group of timing values. Alternatively, a plurality of links may correspond to one group of timing values. Alternatively, one link may correspond to a plurality of groups of timing values.

Based on the foregoing technical content, the first communication device may determine, by using the mapping relationship information, a plurality of pieces of link information and a transmit timing value and/or a receive timing value corresponding to each link. When performing communication through the target link, the first communication device may determine the timing value of the target link in the plurality of pieces of link information based on the mapping relationship information, to implement the fast link switching and the multi-link communication. In addition, the plurality of pieces of link information and the corresponding timing values are configured, so that signaling indication efficiency can be improved, and timing information of the plurality of links can be determined more quickly, to reduce the delay and signaling overheads.

With reference to the second aspect, in some possible implementations of the second aspect, when the mapping relationship information indicates the at least one link, the mapping relationship information includes an index of the link and/or identifiers of a communication pair corresponding to the link, and the communication pair includes a sending device and a receiving device.

Based on the foregoing technical content, in a scenario in which the first communication device performs communication through a plurality of links, each link may be indicated by an index of the link or identifiers of a communication pair. The mapping relationship information may include a mapping relationship between an index of the at least one link and the at least one group of timing values or a mapping relationship between identifiers of at least one communication pair and the at least one group of timing values. When performing communication through the target link, the first communication device may determine the timing value of the target link based on the mapping relationship information, to implement the fast link switching and the multi-link communication.

With reference to the second aspect, in some possible implementations of the second aspect, when the mapping relationship information indicates the at least one group of timing values, the mapping relationship information includes at least one transmit timing value and/or at least one receive timing value.

Based on the foregoing technical content, in the scenario in which the first communication device performs communication through the plurality of links, the second communication device may directly indicate the transmit timing value and/or the receive timing value, so that the first communication device determines time domain positions for sending and/or receiving to be performed on different links, to implement the fast link switching and the multi-link communication.

With reference to the second aspect, in some possible implementations of the second aspect, when the mapping relationship information indicates the at least one group of timing values, the mapping relationship information includes an offset of each of at least one transmit timing value and/or at least one receive timing value relative to a timing value on a reference link.

Based on the foregoing technical content, in the scenario in which the first communication device performs communication through the plurality of links, the second communication device may indicate the timing value by using the offset relative to the timing value on the reference link. This can reduce indication overheads, and implement the fast link switching and the multi-link communication.

With reference to the second aspect, in some possible implementations of the second aspect, the reference link is a link that has been synchronously accessed, and the reference link includes a link between a terminal device and a network device or a link between terminal devices.

Based on the foregoing technical content, in the scenario in which the first communication device performs communication through the plurality of links, when indicating the timing value in the mapping relationship information, the second communication device may indicate the offset relative to the timing value on the link that has been synchronously accessed, and a synchronization signal does not need to be sent for the target link, to reduce signal overheads, reduce the delay, and implement the fast link switching and the multi-link communication.

With reference to the second aspect, in some possible implementations of the second aspect, the method further includes: sending the timing value on the reference link.

With reference to the second aspect, in some possible implementations of the second aspect, indication information that is in the mapping relationship information and that indicates the at least one group of timing values corresponds to a link type.

Based on the foregoing technical content, the indication information of the timing value corresponds to the link type, so that timing requirements for different link types can be met, and overheads for indicating the timing value can be reduced.

According to a third aspect, this application provides a communication apparatus, including modules or units configured to implement the method according to any one of the first aspect or the second aspect and the possible implementations of the first aspect or the second aspect. It should be understood that the modules or units may implement corresponding functions by executing a computer program.

According to a fourth aspect, this application provides a communication apparatus, including a processor. The processor is configured to perform the communication method according to any one of the first aspect or the second aspect and the possible implementations of the first aspect or the second aspect.

The apparatus may further include a memory, configured to store instructions and data. The memory is coupled to the processor. When executing the instructions stored in the memory, the processor may implement the methods described in the foregoing aspects. The apparatus may further include a communication interface. The communication interface is used by the apparatus to communicate with another device. For example, the communication interface may be a transceiver, a circuit, a bus, a module, or another type of communication interface.

According to a fifth aspect, this application provides a chip system. The chip system includes at least one processor, configured to support implementation of a function according to any one of the first aspect or the second aspect and the possible implementations of the first aspect or the second aspect, for example, obtain or process data and/or information in the foregoing methods.

In a possible design, the chip system further includes a memory. The memory is configured to store program instructions and data. The memory is located inside the processor or outside the processor.

The chip system may include a chip, or may include a chip and another discrete component.

According to a sixth aspect, this application provides a computer-readable storage medium, including a computer program. When the computer program is run on a computer, the computer is enabled to implement the method according to any one of the first aspect or the second aspect and the possible implementations of the first aspect or the second aspect.

According to a seventh aspect, this application provides a computer program product. The computer program product includes a computer program (which may also be referred to as code or instructions). When the computer program is run, a computer is enabled to perform the method according to any one of the first aspect or the second aspect and the possible implementations of the first aspect or the second aspect.

According to an eighth aspect, this application provides a communication system. The communication system includes a first communication device, and the first communication device may be configured to implement the method according to any one of the first aspect and the possible implementations of the first aspect.

Optionally, the communication system further includes a second communication device, and the second communication device may be configured to implement the method according to any one of the second aspect and the possible implementations of the second aspect.

It should be understood that, the technical solutions of the third aspect to the eighth aspect of this application correspond to the technical solutions of the first aspect and the second aspect of this application, and beneficial effects achieved in the aspects and corresponding feasible implementations are similar. Details are not described again.

**BRIEF DESCRIPTION OF DRAWINGS**

FIG. 1 is a diagram of a scenario according to an embodiment of this application;
FIG. 2 is a diagram of a system architecture according to an embodiment of this application;

FIG. 3 is a schematic flowchart of a communication method according to an embodiment of this application;

FIG. 4 is a diagram of mapping relationship information according to an embodiment of this application;

FIG. 5 is another schematic flowchart of a communication method according to an embodiment of this application;

FIG. 6 is another schematic flowchart of a communication method according to an embodiment of this application;

FIG. 7 is a diagram of indicating, in a unicast scenario, a timing value on a link that has been synchronously accessed according to an embodiment of this application;

FIG. 8 is a diagram of indicating, in a unicast scenario, a timing value on a link that has not been synchronously accessed according to an embodiment of this application;

FIG. 9 is another diagram of indicating, in a unicast scenario, a timing value on a link that has not been synchronously accessed according to an embodiment of this application;

FIG. 10 is a diagram of determining a timing value on a link in a multicast scenario according to an embodiment of this application;

FIG. 11 is a block diagram of a communication apparatus according to an embodiment of this application;

FIG. 12 is another block diagram of a communication apparatus according to an embodiment of this application;

FIG. 13 is a diagram of a structure of a communication apparatus according to an embodiment of this application; and

FIG. 14 is another diagram of a structure of a communication apparatus according to an embodiment of this application.

## DESCRIPTION OF EMBODIMENTS

The following describes technical solutions in this application with reference to the accompanying drawings.

The technical solutions provided in this application may be applied to various communication systems, for example, a 5th generation (5th Generation, 5G) mobile communication system or a new radio access technology (new radio access technology, NR). The 5G mobile communication system may include a non-standalone (non-standalone, NSA) architecture and/or a standalone (standalone, SA) architecture.

The technical solutions provided in this application may be further applied to machine type communication (machine type communication, MTC), long term evolution-machine (long term evolution-machine, LTE-M), a device-to-device (device to device, D2D) network, a machine-to-machine (machine to machine, M2M) network, an internet-of-things (internet of things, IoT) network, or another network. The IoT network may include, for example, an internet of vehicles. Communication modes in an internet-of-vehicles system are collectively referred to as vehicle to X (vehicle to X, V2X, where X can stand for anything). For example, the V2X may include: vehicle-to-vehicle (vehicle to vehicle, V2V) communication, vehicle-to-infrastructure (vehicle to infrastructure, V2I) communication, vehicle-to-pedestrian (vehicle to pedestrian, V2P) communication, or vehicle-to-network (vehicle to network, V2N) communication.

The technical solutions provided in this application may be further applied to a future communication system, for example, a 6th generation mobile communication system. This is not limited in this application.

The technical solutions provided in this application may be further applied to scenarios such as wireless projection, a virtual reality (virtual reality, VR) game, data encoding and decoding in a mobile terminal APP, and smart industrial manufacturing.

The technical solutions provided in this application may be further applied to a non-terrestrial network (non-terrestrial network, NTN) communication system, for example, a satellite communication system. The NTN communication system may be integrated with a wireless communication system. The technical solutions in embodiments of this application may be further applied to an inter-satellite communication system, a wireless projection system, a VR communication system, an integrated access and backhaul (intergrated access backhaul, IAB) system, a wireless fidelity (wireless fidelity, Wi-Fi) communication system, an optical communication system, or the like. The technical solutions provided in this application may be further applied to a D2D communication system, a vehicle-to-everything (vehicle-to-everything, V2X) communication system, a machine-to-machine (machine to machine, M2M) communication system, an MTC system, an internet-of-things (internet of things, IoT) communication system, an integrated sensing and communication system, or another communication system. A communication system to which the technical solutions are applied and a network architecture of the communication system are not specifically limited in this application.

A network device in this application may be a device configured to communicate with a terminal, or may be a device that connects a terminal to a wireless network. The network device may be a node in a radio access network. The network device may be a base station (base station), an evolved NodeB (evolved NodeB, eNodeB), a transmission reception point (transmission reception point, TRP), a home base station (for example, a home evolved NodeB or a home NodeB, HNB), a Wi-Fi access point (access point, AP), a mobile switching center, a next generation NodeB (next generation NodeB, gNB) in the 5G mobile communication system, a next generation base station in the 6th generation (6th generation, 6G) mobile communication system, a base station in a future mobile communication system, or the like. Alternatively, the network device may be a module or unit that completes a part of functions of a base station, for example, may be a central unit (central unit, CU), a distributed unit (distributed unit, DU), an RRU, or a baseband unit (baseband unit, BBU). Alternatively, the network device may be a device that functions as a base station in the D2D communication system, the V2X communication system, the M2M communication system, the IoT communication system, and the like. Alternatively, the network device may be a network device in an NTN, to be specific, the network device may be deployed on a high-altitude platform or a satellite. The network device may be a macro base station, a micro base station, an indoor base station, a relay node, a donor node, or the like. Certainly, the network device may alternatively be a node in a core network. A specific technology, a device form, and a name that are used by the network device are not limited in embodiments of this application.

The terminal in this application is a device having a wireless transceiver function, and may also be referred to as user equipment (user equipment, UE), a user, an access terminal, a subscriber unit, a subscriber station, a mobile station, a mobile station, a remote station, a remote terminal, a mobile device, a user terminal, a terminal device, a wireless communication device, a user agent, a user apparatus, or the like. The terminal may be a mobile phone (mobile phone), a tablet computer (Pad), a computer having a wireless transceiver function, a VR terminal, an augmented reality (augmented reality, AR) terminal, a terminal in satellite communication, a terminal in an IAB system, a terminal in a Wi-Fi communication system, a terminal in industrial control (industrial control), a terminal in self-driving (self driving), a terminal in telemedicine (remote medical), a terminal in a smart grid (smart grid), a terminal in transportation safety (transportation safety), a terminal in a smart city (smart city), a terminal in a smart home (smart home), a sensor, a device in integrated sensing and communication, or the like. A specific technology, a device form, and a name that are used by the terminal are not limited in embodiments of this application.

It should be noted that roles of the network device and the terminal may be relative. For example, a network device #1 may be configured as a mobile base station. For those terminals that access a network through the network device #1, the network device #1 is a base station. However, for a network device #2 that communicates with the network device #1 by using a wireless air interface protocol, the network device #1 is a terminal. Certainly, the network device #1 and the network device #2 may alternatively communicate with each other by using an interface protocol between base stations. In this case, the network device #1 is also a base station for the network device #2.

In this application, both the network device and the terminal device may be collectively referred to as communication apparatuses. For example, the base station may be referred to as a communication apparatus having a function of the base station, and the terminal device may be referred to as a communication apparatus having a function of the terminal. The network device and the terminal device in this application may be deployed on land, including indoor devices, outdoor devices, handheld devices, wearable devices, or vehicle-mounted devices; may be deployed on water (for example, on a ship); or may be deployed in air (for example, on an airplane, a balloon, and a satellite). Application scenarios of the network device and the terminal device are not limited in this application.

In this application, communication between the network device and the terminal, between network devices, or between terminals may be performed through a licensed spectrum, may be performed through an unlicensed spectrum, or may be performed through both a licensed spectrum and an unlicensed spectrum. The technical solutions in this application are applicable to a low-frequency scenario, for example, sub 6G (a frequency band below 6 GHz, which may be specifically a frequency band with a working frequency from 450 megahertz (MHz) to 6000 MHz, namely, 6 gigahertz (gigahertz, GHz) (where 6 GHz may be referred to as 6G for short)), and are also applicable to a high-frequency scenario (for example, above 6 GHz, for example, 28 GHz or 70 GHz), terahertz (THz), optical communication, and the like. For example, the network device and the terminal may communicate with each other through a spectrum below 6 GHz, may communicate with each other through a spectrum above 6 GHz, or may communicate with each other through both a spectrum below 6 GHz and a spectrum above 6 GHz. A spectrum resource for communication is not limited in embodiments of this application.

In this application, a function of the network device may alternatively be performed by a module (for example, a chip) in the network device, or may be performed by a control subsystem including a function of the network device. The control subsystem including the function of the network device may be a control center in the foregoing application scenarios, such as the smart grid, the industrial control, intelligent transportation, and the smart city, of the terminal. The function of the terminal may alternatively be performed by a module (for example, a chip or a modem) in the terminal, or may be performed by an apparatus including the function of the terminal.

The technical solutions provided in this application may be further applied to various types of communication links, such as a Uu link, a satellite link, a sidelink (sidelink, SL) link, and a relay link. This is not limited in this application.

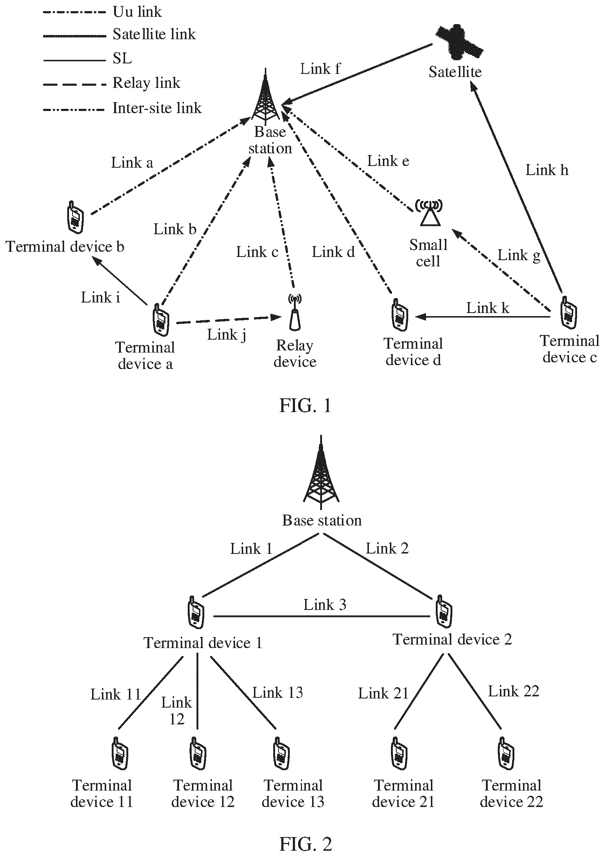

FIG. 1 is a diagram of a scenario according to an embodiment of this application. Devices included in this scenario are a terminal device a to a terminal device d, a base station, a relay (relay) device, a small cell, and a satellite.

Links included in this scenario are a link a to a link k. Each link includes one communication pair, and the communication pair includes two communication devices. When one of the communication devices is used as a sending device, the other communication device is used as a receiving device.

For example, a communication pair on the link a includes the base station and the terminal device b, a communication pair on the link b includes the base station and the terminal device a, a communication pair on the link c includes the base station and the relay device, a communication pair on the link d includes the base station and the terminal device d, a communication pair on the link e includes the base station and the small cell, a communication pair on the link f includes the base station and the satellite, a communication pair on the link g includes the small cell and the terminal device c, a communication pair on the link h includes the satellite and the terminal device c, a communication pair on the link i includes the terminal device a and the terminal device b, a communication pair on the link j includes the terminal device a and the relay device, and a communication pair on the link k includes the terminal device c and the terminal device d.

Link types of the links shown in FIG. 1 include a Uu link, a satellite link, an SL link, an inter-site link, and a relay link. It should be understood that each link may have a corresponding link type. The Uu link may be a link for communication between the base station and the terminal device, for example, the link a, the link b, the link d, and the link g. The SL link may be a link for communication between the terminal devices, for example, the link i and the link k. The satellite link may be a link for communication between the satellite and the base station or a link for communication between the satellite and the terminal device, for example, the link f and the link h. The inter-site link may be a link for communication between base stations, for example, the link c, the link e, and the link f, where the base stations include the small cell, a satellite station, or the like. The relay link may be a link for communication between the terminal device and the relay device, for example, the link j.

It should be understood that the link types and the link quantities shown in FIG. 1 are merely examples for description. This scenario may alternatively include more or fewer link types and larger or smaller link quantities. For example, an inter-satellite link for communication between satellites may be further included. This is not limited in this application.

In the scenario shown in FIG. 1, communication devices on each link may switch to different links by using a cell handover mechanism. It should be understood that link types before and after the switching may be the same or different. For example, the terminal device b first communicates with the base station on the link a, and may also communicate with the terminal device a on the link i by using the cell handover mechanism.

Currently, after a link of any communication device is switched, a device that communicates with the communication device may change, corresponding link propagation duration usually also changes, and time domain positions for sending and receiving performed by the communication device on different links are also different. Therefore, each time the communication device accesses a link, the communication device needs to perform uplink and downlink synchronization, to obtain transmit and receive timing on the link. For example, in FIG. 1, the terminal device b first communicates with the base station on the link a. After a period of time, the terminal device b expects to switch to the link i to communicate with the terminal device a. Because link propagation duration on the link a is different from that on the link i, and a communication object of the terminal device b changes from the base station to the terminal device a, a network device needs to temporarily configure a timing value of the terminal device b on the link i. Because the network device needs to consume a specific period of time to configure the timing value, a link switching delay is easy to be long, and even a service interruption problem of the communication device occurs.

In view of this, this application provides a communication method. Mapping relationship information indicating a mapping relationship between at least one link and at least one group of timing values is preconfigured for a communication device. When a new link is scheduled, the communication device may determine a corresponding timing value based on the mapping relationship information, to implement communication based on the timing value. A timing value on each link is preconfigured, to be specific, before the communication device accesses a link, a corresponding timing value has been configured for each link that may be accessed. Therefore, during inter-link switching, the communication device does not need to obtain receive/transmit timing on the link through uplink and downlink synchronization, network scheduling, or the like when accessing the link. This can greatly reduce a switching delay, implement fast switching between different links, and meet more service requirements.

With reference to the accompanying drawings, the following describes in detail the communication method provided in embodiments of this application.

For ease of understanding, an example of a system architecture in this application is first described.

FIG. 2 is a diagram of the system architecture according to an embodiment of this application. The system architecture includes a base station, a terminal device 1, a terminal device 2, a terminal device 11, a terminal device 12, a terminal device 13, a terminal device 21, and a terminal device 22. The terminal device 1 and the terminal device 2 are intelligent terminal devices, and may be configured to manage a subordinate terminal device. For example, the terminal device 1 may manage the terminal device 11, the terminal device 12, and the terminal device 13, and the terminal device 2 may manage the terminal device 21 and the terminal device 22.

A communication pair on each link may perform communication on the corresponding link. In FIG. 2, the base station and the terminal device 1 may communicate on a link 1, the base station and the terminal device 2 may communicate on a link 2, the terminal device 1 and the terminal device 2 may communicate on a link 3, the terminal device 1 and the terminal device 11 may communicate on a link 11, the terminal device 1 and the terminal device 12 may communicate on a link 12, the terminal device 1 and the terminal device 13 may communicate on a link 13, the terminal device 2 and the terminal device 21 may communicate on a link 21, and the terminal device 2 and the terminal device 22 may communicate on a link 22.

It should be understood that link types in FIG. 2 include a Uu link (for example, the link 1 and the link 2) and an SL link (for example, the link 3, the link 11 to the link 13, the link 21, and the link 22).

The following describes in detail the communication method provided in this application.

Before the method provided in embodiments of this application is described, the following descriptions are first provided.

First, to clearly describe the technical solutions in embodiments of this application, terms such as "first" and "second" are used in embodiments of this application to distinguish between same items or similar items that provide basically same functions. For example, a first communication device and a second communication device are merely intended to distinguish between different communication devices, and are not intended to limit a sequence thereof. A person skilled in the art may understand that the terms such as "first" and "second" do not limit a quantity or an execution sequence, and do not indicate a definite difference.

Second, in the embodiments enumerated in this specification, terms and English acronyms and abbreviations such as a physical uplink shared channel (physical uplink shared channel, PUSCH), a physical downlink control channel (physical downlink control channel, PDCCH), transmission control information (transmission control information, TxCI), a channel state information (channel state information, CSI) reference signal (reference signal, RS), and a sounding reference signal (sounding reference signal, SRS) are all examples provided for ease of description, and shall not constitute any limitation on this application. This application does not exclude a possibility of defining, in an existing or future protocol, another term that can implement a same or similar function.

Third, the "protocol" in embodiments of this application may be a standard protocol in the communication field, for example, including an LTE protocol, an NR protocol, and a related protocol used in a future communication system. This is not limited in this application.

Fourth, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, and c may represent a, b, c, a and b, a and c, b and c, or a, b, and c, where a, b, and c may be singular, or may be plural.

Fifth, correspondences enumerated in tables in this application may be configured, or may be predefined. Values of information in the tables are merely examples, and other values may be configured. This is not limited in this application. During correspondence configuration, not all the correspondences enumerated in the tables need to be configured. For example, in the tables in this application, correspondences enumerated in some rows may alternatively not be configured. For another example, proper deformations and adjustments such as splitting and combination may be performed on the foregoing tables. Names of parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

Sixth, in this specification, a plurality of embodiments are described by using a base station as an example of a network device. However, this should not constitute any limitation on this application. It may be understood that the base station in this specification may alternatively be replaced with another network device having a same or similar function.

Seventh, in addition to some existing English acronyms and abbreviations, in this application, downlink may be receiving, and uplink may be sending.

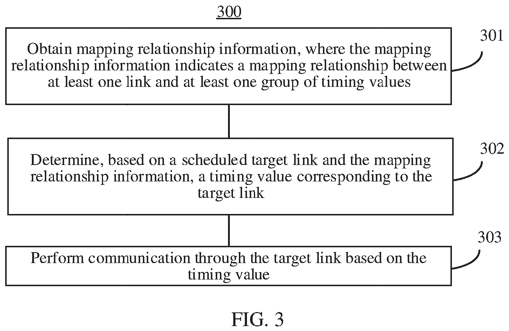

FIG. 3 is a schematic flowchart of a communication method 300 according to an embodiment of this application. It should be understood that the method 300 may be performed by a communication device, may be performed by a component (for example, a circuit, a chip, or a chip system) deployed in the communication device, or may be implemented by a logical module or software that can implement all or a part of functions of the communication device. This is not limited in embodiments of this application. The communication device may be a terminal device, or may be a network device. For example, the communication device may be the base station in FIG. 1, may be the small cell or the satellite in FIG. 1, may be any one of the terminal devices a to d in FIG. 1, or may be the relay device in FIG. 1. This is not limited in this application.

As shown in FIG. 3, the method 300 shown in FIG. 3 may include S301 to S303. The following describes in detail the steps in the method 300 shown in FIG. 3.

S301: Obtain mapping relationship information, where the mapping relationship information indicates a mapping relationship between at least one link and at least one group of timing values, and each group of timing values includes at least one transmit timing value and/or at least one receive timing value.

In this application, the at least one link indicated by the mapping relationship information may be a link for communication between communication devices, and the at least one link may include but is not limited to a link that may be used by the communication device for communication. For example, if the communication device is the base station in FIG. 1, the at least one link may include but is not limited to one or more of the link a to the link f in FIG. 1, may further include one or more of the link g to the link k in FIG. 1, and may further include another link that is not shown in FIG. 1. For another example, if the communication device is the terminal device a in FIG. 1, the at least one link may include but is not limited to one or more of the link b, the link i, and the link j in FIG. 1, may further include but is not limited to one or more of the link a, the link c to the link h, and the link k in FIG. 1, and may further include another link not shown in FIG. 1. In other words, the at least one link may include a link directly connected to the communication device, and may further include a link that is not directly connected to the communication device. This is not limited in this application.

The at least one group of timing values that is indicated by the mapping relationship information one-to-one corresponds to the at least one link. Each group of timing values may include the at least one transmit timing value and/or the at least one receive timing value. The transmit timing value may be for determining a time domain resource for sending, and the receive timing value may be for determining a time domain resource for receiving.

It should be understood that the sending may be specifically sending data, control signaling, a reference signal, or the like. Alternatively, the sending may be expanded to sending any signal.

Correspondingly, the receiving may be specifically receiving data, control signaling, a reference signal, or the like. Alternatively, the receiving may be expanded to receiving any signal.

The following provides several examples of determining the time domain resources for sending and receiving.

It should be noted that the following examples of determining the time domain resources are merely examples, and should not constitute any limitation on this application. A time unit below may be a radio frame, a frame, a slot, a mini-slot, a sub-slot, or a symbol, or may be a time unit that may be defined in a future protocol. This application includes these time units but is not limited thereto. It should be further understood that a frame structure described below may alternatively be a structure of the time unit.

In addition, the following examples of a channel, the control signaling, the reference signal, and the like are also merely examples. A person skilled in the art may understand that, in a future protocol, another channel, another reference signal, or the like may be defined to implement a same or similar function.

In an example, the transmit timing value may be for determining a time domain position for sending the data, and the receive timing value may be for determining a time domain position for receiving the data.

In a possible design, the time domain position for sending the data satisfies the following formula:

$$\left\lfloor n \cdot \frac{2^{\mu_{PUSCH}}}{2^{\mu_{PDCCH}}} \right\rfloor + K_2 + K_{offset}$$

n represents a number of a time unit in which scheduling information is located, and the scheduling information is for scheduling the communication device to send the data. $\mu_{PUSCH}$ represents a subcarrier spacing of a PUSCH. $\mu_{PDCCH}$ represents a subcarrier spacing of a PDCCH. $K_2$ represents an offset between the time unit for the scheduling information and a time unit for the data.

It should be understood that $\left\lfloor n \cdot \frac{2^{\mu_{PUSCH}}}{2^{\mu_{PDCCH}}} \right\rfloor + K_2$ is for determining a position that is in the frame structure (for example, the radio frame, the frame, the slot, and/or the symbol) and that is of a time domain resource for sending the data.

$K_{offset}$ represents a timing offset. $K_{offset}$ may be determined by using the foregoing transmit timing value, and is for determining an offset of the frame structure.

In another example, the transmit timing value may be for determining a time domain position for sending the control signaling, and the receive timing value may be for determining a time domain position for receiving the control signaling.

In a possible design, a time domain position for sending TxCI satisfies the following formula:

$$n + K_1 + K_{offset}$$

n represents a number of a time unit in which scheduling information is located. $K_1$ represents an offset between the time unit for the scheduling information and a time unit for the transmission control information. It should be understood that $n+K_1$ is for determining a position that is in the frame structure (for example, the radio frame, the frame, the slot, and/or the symbol) and that is of a time domain resource for sending the TxCI.

Similarly, $K_{offset}$ represents a timing offset. $K_{offset}$ may be determined by using the foregoing transmit timing value, and is for determining an offset of the frame structure.

In still another example, the transmit timing value may be for determining a time domain position for sending the reference signal.

In a possible design, the reference signal is, for example, a CSI-RS.

In this case, the time domain position for sending the CSI-RS satisfies the following formula:

$$n + n_{CSI_{ref}} + K_{offset}$$

n represents a number of a time unit in which scheduling information is located, and the scheduling information indicates the communication device to send the CSI-RS. $n_{CSI_{ref}}$ represents an offset between the time unit for the scheduling information and a time unit for the CSI-RS. It should be understood that $n - n_{CSI_{ref}}$ is for determining a position that is in the frame structure (for example, the radio frame, the frame, the slot, and/or the symbol) and that is of a time domain resource for sending the CSI-RS.

Similarly, $K_{offset}$ represents a timing offset. $K_{offset}$ may be determined by using the foregoing transmit timing value, and is for determining an offset of the frame structure.

In another possible design, the reference signal is, for example, an SRS.

In this case, the time domain position for sending the SRS satisfies the following formula:

$$\left\lfloor n \cdot \frac{2^{\mu_{SRS}}}{2^{\mu_{PDCCH}}} \right\rfloor + k + K_{offset}$$

n represents a number of a time unit in which scheduling information is located, and the scheduling information is for scheduling the communication device to send the SRS. $\mu_{SRS}$ represents a subcarrier spacing of the SRS. $\mu_{PDCCH}$ represents a subcarrier spacing of a PDCCH. k represents an offset between the time unit for the scheduling information and a time unit for the SRS.

It should be understood that $\left\lfloor n \cdot \frac{2^{\mu_{SRS}}}{2^{\mu_{PDCCH}}} \right\rfloor + k$ is for determining a position that is in the frame structure (for example, the radio frame, the frame, the slot, and/or the symbol) and that is of a time domain resource for sending the SRS.

$K_{offset}$ represents a timing offset. $K_{offset}$ may be determined by using the foregoing transmit timing value, and is for determining an offset of the frame structure.

In the foregoing plurality of examples, $K_{offset}$ may be determined by using the following formulas:

In an example, $K_{offset}$ may be determined by using the following absolute-value indication formula:

$$K_{offset} = T_A \cdot 16 \cdot 64 / 2^{\mu}$$

In another example, $K_{offset}$ may alternatively be determined by using the following relative-value indication formula:

$$K_{offset} = N_{TA\_ref} + \left(T_A - T_{AMAX} / 2\right) \cdot 16 \cdot 64 / 2^{\mu}$$

$N_{TA\_ref}$ represents a reference timing value. $T_{AMAX}$ represents a maximum timing value. $\mu$ represents a subcarrier spacing that may be, for example, 15 kHz (kHz), 30 kHz, 60 kHz, or 120 kHz. $T_A$ is the transmit timing value or the receive timing value that is indicated by the mapping relationship information in this solution.

It should be understood that the foregoing enumerated formulas, reference signals, control signaling, and the like are merely examples, and should not constitute any limitation on this application.

The following describes the mapping relationship information in detail with reference to examples.

In one aspect, when the mapping relationship information indicates the at least one link, the mapping relationship information may indicate an index (index) of each link and/or identifiers (identifiers, IDs) of a communication pair corresponding to the link. In other words, the mapping relationship information may include the index of the link and/or the identifiers of the communication pair corresponding to the link.

Each communication pair may include one or more sending devices and one or more receiving devices. It should be understood that one sending device may correspond to one receiving device, or may correspond to one group of receiving devices (for example, including a plurality of receiving devices). One receiving device may correspond to one sending device, or may correspond to one group of sending devices (for example, including a plurality of sending devices). The identifiers of the communication pair may include an identifier of the sending device and an identifier of the receiving device.

For example, as shown in FIG. 2, the mapping relationship information may indicate indexes of the links shown in FIG. 2. For example, the mapping relationship information may indicate indexes of the following links: the link 1, the link 2, the link 3, the link 11, the link 12, the link 13, the link 21, and the link 22.

The mapping relationship information may alternatively indicate identifiers of different communication pairs shown in FIG. 2. For example, the mapping relationship information may indicate identifiers of the following communication pairs: the base station and the terminal device 1, the base station and the terminal device 2, the terminal device 1 and the terminal device 2, the terminal device 1 and the terminal device 11, the terminal device 1 and the terminal device 12, the terminal device 1 and the terminal device 13, the terminal device 2 and the terminal device 21, and the terminal device 2 and the terminal device 22.

The mapping relationship information may alternatively indicate both an index of the link and identifiers of a communication pair corresponding to the link. For example, when indicating that the index of the link includes the link 1, the mapping relationship information also indicates identifiers of a communication pair, namely, the base station and the terminal device 1, corresponding to the link 1.

In this application, when the mapping relationship information indicates the index of the link, the index of the link may not reflect a communication direction, for example, a data or signaling transmission direction, or may reflect a communication direction.

For example, as shown in FIG. 2, when the mapping relationship information indicates the index, for example, the link 3, and when a communication direction of the indicated link 3 is not reflected, it may be considered that on the link 3, the terminal device 2 may send data or signaling to the terminal device 1, in other words, the terminal device 2 serves as a sending device, and the terminal device 1 serves as a receiving device; or the terminal device 1 may send data or signaling to the terminal device 2, in other words, the terminal device 1 serves as a sending device, and the terminal device 2 serves as a receiving device. When a communication direction of the indicated link 3 is reflected, different sub-links may be further obtained through division based on different communication directions. For example, a link 3a indicates that the communication direction is from the terminal device 2 to the terminal device 1, and a link 3b indicates that the communication direction is from the terminal device 1 to the terminal device 2. Therefore, it may be learned based on the link 3a that the sending device is the terminal device 2, and the receiving device is the terminal device 1; and it may be learned based on the link 3b that the sending device is the terminal device 1, and the receiving device is the terminal device 2.

Correspondingly, when the mapping relationship information indicates the identifiers of the communication pair, the identifiers of the communication pair may not reflect a communication direction of the communication pair, or may reflect a communication direction of the communication pair.

For example, in FIG. 2, when the mapping relationship information indicates the communication pair, for example, the terminal device 1 and the terminal device 2, and when a communication direction of the indicated communication pair is not reflected, the mapping relationship information indicates the communication pair, namely, the terminal device 1 and the terminal device 2, and only communication between the terminal device 1 and the terminal device 2 is reflected for the communication pair. When a communication direction of the indicated communication pair is reflected, a sorting order of devices in the communication pair may represent the communication direction. For example, when the identifiers of the communication pair that are indicated by the mapping relationship information are the terminal device 2 and the terminal device 1, it is considered that the terminal device 2 serves as a sending device, and the terminal device 1 serves as a receiving device; or when the identifiers of the communication pair that are indicated by the mapping relationship information are the terminal device 1 and the terminal device 2, it is considered that the terminal device 1 serves as a sending device, and the terminal device 2 serves as a receiving device.

It should be understood that when the mapping relationship information indicates the index of the link and the identifiers of the corresponding communication pair, either of the index and the identifiers may reflect the communication direction, or both of the index and the identifiers may reflect the communication direction. This is not limited in this application.

In another aspect, when the mapping relationship information indicates the at least one group of timing values, there may be the following two possible implementations.

In a first possible implementation, each timing value may be directly indicated.

When the mapping relationship information indicates the at least one group of timing values, the mapping relationship information may indicate the at least one transmit timing value and/or the at least one receive timing value included in each group of timing values. In other words, the mapping relationship information may include at least one transmit timing value and/or at least one receive timing value.

Specifically, the mapping relationship information may indicate (for example, directly) transmit timing values and/or receive timing values, on a corresponding link, of communication devices in a communication pair. The transmit timing value and/or the receive timing value herein are/is $T_A$ in the foregoing formula.

For example, in FIG. 2, for the link 3, timing values indicated by the mapping relationship information may include:

a transmit timing value $T_{1Tx}$ of the terminal device 1 and a receive timing value $T_{2Rx}$ of the terminal device 2; and a receive timing value $T_{1Rx}$ of the terminal device 1 and a transmit timing value $T_{2Tx}$ of the terminal device 2.

Optionally, when the mapping relationship information indicates the transmit timing value and the receive timing value, the transmit timing value and the receive timing value may be indicated in different signaling, or may be indicated in same signaling. When indicated in different signaling, the transmit timing value and the receive timing value may correspond to different links.

For example, in FIG. 2, when the mapping relationship information indicates the transmit timing value and the receive timing value of the terminal device 1 on the link 3, in an example, the transmit timing value and the receive timing value of the terminal device 1 may be indicated in same signaling, and a corresponding link is the link 3. In this case, the mapping relationship information may indicate: the link 3, the terminal device 1, the terminal device 2, the transmit timing value $T_{1Tx}$, and the receive timing value $T_{1Rx}$. In another example, the transmit timing value and the receive timing value of the terminal device 1 may be separately indicated in different signaling. In this case, the mapping relationship information may indicate: the link 3a, the terminal device 2, the terminal device 1, and the receive timing value $T_{1Rx}$; and the link 3b, the terminal device 1, the terminal device 2, and the transmit timing value $T_{1Tx}$.

In a second possible implementation, the timing value may be indicated by using a difference.

When the mapping relationship information indicates the at least one group of timing values, the mapping relationship information may specifically indicate an offset of the at least one transmit timing value and/or the at least one receive timing value included in each group of timing values relative to a timing value on a reference link. In other words, the mapping relationship information may include an offset of at least one transmit timing value and/or at least one receive timing value relative to the timing value on the reference link.

In this application, the mapping relationship information may indicate (for example, indirectly) transmit timing values and/or receive timing values, on a corresponding link, of communication devices in a communication pair, in other words, the transmit timing value and/or the receive timing value are/is indicated by an offset of $T_A$ in the foregoing formula relative to the timing value on the reference link. It should be understood that the transmit timing value and/or the receive timing value may be determined by using the timing value on the reference link and the offset.

The reference link is a link that has been synchronously accessed, and the reference link includes a link between a terminal device and a network device or a link between terminal devices.

Optionally, the reference link may be configured by the network device by using signaling, or may be predefined in a protocol. This is not limited in this application. For example, it is predefined in the protocol that the reference link is the link between the terminal device and the network device.

It should be understood that whether the reference link is the link between the terminal device and the network device or the link between the terminal devices depends on which link is the link that has been synchronously accessed.

In an example, for the link that has been synchronously accessed, when the mapping relationship information indicates a timing value of a communication device on the link that has been synchronously accessed, the mapping relationship information may indicate only an offset of a transmit timing value of the communication device relative to a receive timing value of the communication device on the reference link. In this case, the reference link is the link that has been synchronously accessed, and a reference point is the receive timing value of the communication device on the link that has been synchronously accessed. It should be understood that the receive timing value of the communication device may be a receiving synchronization timing value on the link.

For example, in FIG. 2, it is assumed that the communication link 1 between the base station and the terminal device 1 is the link that has been synchronously accessed. When the mapping relationship information indicates a transmit timing value and a receive timing value of the terminal device 1 on the link 1, because the terminal device 1 may receive a synchronization signal from the base station, the terminal device 1 may autonomously determine the receive timing value of the terminal device 1 on the link 1. Therefore, the mapping relationship information does not need to indicate the receive timing value of the terminal device 1 on the link 1, and only indicates the transmit timing value of the terminal device 1 on the link 1. When the transmit timing value of the terminal device 1 on the link 1 is indicated, the link 1 may be the reference link, and the receive timing value of the terminal device 1 on the link 1 may be used as the reference point, to indicate an offset 1 relative to the reference point, to indirectly indicate the transmit timing value of the terminal device 1 on the link 1.

In another example, for a link that has not been synchronously accessed, when the mapping relationship information indicates a timing value of a communication device on the link that has not been synchronously accessed, the mapping relationship information may indicate offsets of a transmit timing value and a receive timing value of the communication device relative to the timing value on the reference link. In this case, when the receive timing value of the communication device is indicated, the reference link may be a link that has been synchronously accessed and on which the communication device is located, and a reference point is a receive timing value or a transmit timing value of the communication device on the link that has been synchronously accessed. When the transmit timing value of the communication device is indicated, the reference link may be the link that has been synchronously accessed and on which the communication device is located, and a reference point is the receive timing value or the transmit timing value of the communication device on the link that has been synchronously accessed; or the reference link may be a link that has not been synchronously accessed and on which the communication device is located, and a reference point is a receive timing value or a transmit timing value of the communication device on the link that has not been synchronously accessed. Therefore, in this scenario, there may be one or more reference links.

It should be understood that, when the communication device on the link has only a sending or receiving function, only the offset of the transmit timing value relative to the timing value on the reference link or an offset of the receive timing value relative to the timing value on the reference link may be indicated.

For example, as shown in FIG. 2, it is assumed that the link 1 between the base station and the terminal device 1 is the link that has been synchronously accessed, and the communication link 3 between the terminal device 1 and the terminal device 2 is the link that has not been synchronously accessed. Because the terminal device 1 may receive a synchronization signal from the base station, the terminal device 1 may autonomously determine a receive timing value of the terminal device 1 on the link 1. Therefore, when the mapping relationship information indicates a receive timing value of the terminal device 1 on the link 3, the link 1 may be used as the reference link, and the receive timing value of the terminal device 1 on the link 1 may be used as the reference point. The receive timing value of the terminal device 1 on the link 3 may be indirectly indicated by indicating an offset 3 relative to the receive timing value of the terminal device 1 on the link 1.

When the mapping relationship information indicates a transmit timing value of the terminal device 1 on the link 3, in an example, the link 1 may be used as the reference link, and the receive timing value of the terminal device 1 on the link 1 may be used as the reference point. The transmit timing value of the terminal device 1 on the link 3 may be indirectly indicated by indicating an offset 4 relative to the receive timing value of the terminal device 1 on the link 1. In another example, the link 3 is used as the reference link, and the receive timing value of the terminal device 1 on the link 3 may be used as the reference point. The transmit timing value of the terminal device 1 on the link 3 may be indirectly indicated by indicating an offset 5 relative to the receive timing value of the terminal device 1 on the link 3.

Similarly, when the mapping relationship information indicates the offsets of the transmit timing value and the receive timing value relative to the timing value on the reference link, the offsets of the transmit timing value and the receive timing value relative to the timing value on the reference link may also be indicated in different signaling or in same signaling.

Optionally, the method 200 further includes: obtaining the timing value on the reference link.

In an example, the terminal device autonomously determines the timing value on the reference link.

For the link that has been synchronously accessed, a reference link for a terminal device on the link may be the link that has been synchronously accessed. Because the terminal device may receive a synchronization signal, the terminal device may determine a receiving synchronization timing value, namely, a receive timing value, based on the received synchronization signal. For example, if the network device sends the synchronization signal at a moment t1, and the terminal device receives the synchronization signal at a moment t2, the terminal device may determine the receive timing value based on the moment t2.

For the link that has not been synchronously accessed, when a transmit timing value and/or a receive timing value of a terminal device on the link are/is determined, a reference link may be a link that has been synchronously accessed and on which the terminal device is located, in other words, a receive timing value of the terminal device on the link that has been synchronously accessed is used as a reference point. In this case, the terminal device may determine, in the same manner by using a synchronization signal, a receiving synchronization timing value on the link that has been synchronously accessed, in other words, determine the receive timing value on the reference link.

It should be noted that the link that has been synchronously accessed by the communication device may specifically mean that the communication device completes receiving synchronization with another communication device on a peer side of the link by receiving a synchronization signal, and/or the communication device completes sending synchronization with another communication device on a peer side of the link by sending an access signal.

It should be understood that the terminal device may alternatively obtain the receiving synchronization timing value by using another signal, for example, a CSI-RS, an SRS, a discovery signal, or a sensing signal, on the link. This is not limited in this application.

It should be further understood that the terminal device may alternatively obtain a sending synchronization timing value by using another signal, for example, a random access channel (random access channel, RACH), a preamble sequence, an SRS, a discovery signal, or a sensing signal, on the link. This is not limited in this application.

In another example, the network device indicates the timing value on the reference link, so that the terminal device obtains the timing value on the reference link by using the indication from the network device.

For the link that has been synchronously accessed, the network device may use a receive timing value on the link as a reference point for indication. Therefore, the network device needs to determine the receive timing value on the link.

In an example, when the network device is on the link that has been synchronously accessed, for a terminal device on the link, a reference link is the link that has been synchronously accessed. When a receive timing value of the terminal device on the link is indicated by the network device, the network device may determine, in the following manner, the receive timing value of the terminal device on the link that has been synchronously accessed: Assuming that the network device sends a synchronization signal at a moment t1, and the terminal device receives the synchronization signal at a moment t2, after receiving the synchronization signal, the terminal device needs to send an uplink access signal. Assuming that the terminal device sends the uplink access signal at a moment t3, and the network device receives the uplink access signal at a moment t4, because the network device may usually know a distance from the synchronization signal, the moment t3 at which the terminal device sends the uplink access signal may be deduced based on the distance between the two and the moment t4 at which the uplink access signal is received, and then duration, namely, t4-t3, from the moment at which the terminal device sends the uplink access signal to the moment at which the network device receives the uplink access signal is determined. Therefore, the network device may correspondingly determine duration, namely, t2-t1=t4-t3, from the moment at which the network device sends the synchronization signal to the moment at which the terminal device receives the synchronization signal. The network device knows the moment t1 at which the synchronization signal is sent. Therefore, the network device may determine the moment t2 at which the terminal device receives the synchronization signal, to indicate that a receive timing value of the network device on the link that has been synchronously accessed is t2.

In another example, when the network device is not located on the link that has been synchronously accessed, the network device may calculate, based on locations of two communication devices on the link that has been synchronously accessed, a delay of information transmission between the two communication devices, to estimate the receive timing value on the link.

For the link that has not been synchronously accessed, the network device may indicate a timing value by using, as a reference point, a receive timing value on the link that has been synchronously accessed. For a specific manner in which the network device determines the receive timing value on the link that has been synchronously accessed, refer to the foregoing descriptions. Details are not described again. It should be understood that, the link that has not been synchronously accessed and the link that has been synchronously accessed have same communication devices herein.

In this application, indication information that is in the mapping relationship information and that indicates the at least one group of timing values corresponds to a link type.

Specifically, the indication information may use an indication bit or a symbol value for indication.

In a design, when the indication information uses the indication bit for indication, the indication bit may indicate the timing value, and a quantity of indication bits and a value of the indication bit correspond to the link type. The following several correspondence tables may be designed:

**Table 1**

| Link type | Value ranges of the transmit timing value and the receive timing value |
|---|---|
| Link type 0 | $[T_{01}, T_{02}]$, where $T_{AMAX} = T_0$ |
| Link type 1 | $[T_{11}, T_{12}]$, where $T_{AMAX}=T_1$ |
| ... | ... |
| Link type y | $[T_{y1}, T_{y2}]$, where $T_{AMAX} = T_y$ |

$T_{01}$ to $T_{y2}$ may be real numbers, and may be positive numbers, 0, or negative numbers. $T_0$ to $T_y$ are positive real numbers.

For Table 1, an example is as follows:

| Link type | Value ranges of the transmit timing value and the receive timing value |
|---|---|
| Uu link | [-64, 64], where $T_{AMAX} =64$ |
| SL | [-16, 16], where $T_{AMAX} =16$ |
| Satellite link | [-3846, 3846], where $T_{AMAX} =3846$ |
| IAB/Relay link | [-32, 32], where $T_{AMAX} =32$ |

**Table 2**

| Link type | Value range of the transmit timing value | Value range of the receive timing value |
|---|---|---|
| Link type 0 | $[T'_{01}, T'_{02}]$, where $T_{AMAX} =T'_0$ | $[T''_{01}, T''_{02}]$, where $T_{AMAX} =T''_0$ |
| Link type 1 | $[T'_{11}, T'_{12}]$, where $T_{AMAX} = T'_1$ | $[T''_{11}, T''_{12}]$, where $T_{AMAX}=T''_1$ |
| ... | ... | ... |

(continued)

| Link type | Value range of the transmit timing value | Value range of the receive timing value |
|---|---|---|
| Link type y | $[T'_{y1}, T'_{y2}]$, where $T_{AMAX} = T'_y$ | $[T''_{y1}, T''_{y2}]$, where $T_{AMAX} = T''_y$ |

$T'_{01}$ to $T'_{y2}$ and $T''_{01}$ to $T''_{y2}$ may be real numbers, and may also be positive numbers, 0, or negative numbers. $T'_0$ to $T'_y$ are positive real numbers, and $T''_0$ to $T''_y$ are also positive real numbers.

For Table 2, an example is as follows:

| Link type | Value range of the transmit timing value | Value range of the receive timing value |
|---|---|---|
| Uu link | [0, 64], where $T_{AMAX} = 64$ | [-32, 32], where $T_{AMAX} = 32$ |
| SL | [0, 16], where $T_{AMAX} = 16$ | [-8, 8], where $T_{AMAX} = 8$ |
| Satellite link | [0, 3846], where $T_{AMAX} = 3846$ | [-1923, 1923], where $T_{AMAX} = 1923$ |
| IAB/Relay link | [0, 32], where $T_{AMAX} = 32$ | [-16, 16], where $T_{AMAX} = 16$ |

It should be noted that the foregoing expression [a, b] about the value range may include: a value in an interval [a, b), a value in an interval (a, b], or a value in an interval [a, b].

Table 1 and Table 2 are two optional implementations. Table 1 or Table 2 may indicate the transmit timing value and the receive timing value on the link.

**Table 3**

| Link type | Quantity of timing bits |
|---|---|
| Link type 0 | I0 |
| Link type 1 | I1 |
| ... | ... |
| Link type y | Iy |

For Table 3, an example is as follows:

| Link type | Quantity of timing bits |
|---|---|
| Uu link | 6 |
| SL | 4 |
| Satellite link | 12 or 6 |
| IAB/Relay link | 5 |

It should be understood that Table 3 is associated with Table 1, or Table 3 is associated with Table 2. In other words, the link type, the quantity of timing bits, and the value range of the timing value are associated with each other.

When the mapping relationship information indicates a transmit timing value and/or a receive timing value of a communication device on a link, a link type of the link on which the communication device is located may be first determined, a corresponding quantity of timing bits is determined based on the link type and Table 3, a corresponding value range of the transmit timing value and/or a corresponding value range of the receive timing value are/is determined based on Table 1 or Table 2, a value is selected from the value range, and the value is represented by the corresponding quantity of timing bits.

For example, when a transmit timing value and a receive timing value of a communication device on the Uu link are indicated, it may be first determined based on Table 3 that a quantity of timing bits that corresponds to the Uu link is 6, and it is determined based on Table 1 that value ranges of both the transmit timing value and the receive timing value are [-64, 64]. In this case, using an example of indicating the transmit timing value, a value, for example, 63, may be selected from the value range. 63 is represented by six bits, for example, "111111". In other words, the corresponding transmit timing value may be determined by using "111111" indicated in the mapping relationship information.

In this application, a value corresponding to the quantity of timing bits may be used to implement one-to-one indication. For example, when the quantity of timing bits is 6, the six bits may correspond to 64 values, and each value corresponds to one timing value. Alternatively, a smaller quantity of indication bits may be used to implement alternate indication, to be specific, one bit corresponds to one group of values, and only a part of values in the value range of the timing value are indicated. In other words, a one-to-one indication manner or an alternate indication manner may be used by the quantity of timing bits for indication, as enumerated in Table 4 below.

**Table 4**

| Link type | Meaning of the timing bit |
|---|---|
| Link type 0 | One-to-one indication |
| Link type 1 | One-to-one indication or alternate indication |
| ... | ... |
| Link type y | One-to-one indication |

For Table 4, an example is as follows:

| Link type | Meaning of the timing bit |
|---|---|
| Uu link | One-to-one indication |
| SL | One-to-one indication |
| Satellite link | One-to-one indication or alternate indication |
| IAB/Relay link | One-to-one indication |

It should be understood that a specific value of the transmit timing value and/or a specific value of the receive timing value that are/is indicated in the mapping relationship information may be predefined in a protocol, or may be configured by the network device.

In this application, because the timing value may be indicated by indicating the timing bit, and different timing value ranges and values are used, timing value indication overheads can be reduced.

In another design, when the indication information uses the symbol value for indication, different link types may have corresponding symbol value ranges, and different values in the symbol value range correspond to different timing values.

For example, it is assumed that a value of a timing value on the link 1 is [x1, x2, ..., xn]. When the symbol value is used for indication, x1 to xn may be directly indicated. For example, when the timing value is x2, the symbol value indicates that the timing value is x2, in other words, x2 is sent to the communication device.

For another example, it is assumed that a value of a timing value on the link 2 is [y1, y2, ..., ym]. When the symbol value is used for indication, y2 to ym may be directly indicated. For example, when the timing value is y4, the symbol value indicates that the timing value is y4, in other words, y4 is sent to the communication device.

Further, the mapping relationship information may include a carrier component (carrier component, CC) identifier.

Each CC may correspond to a plurality of links and a plurality of transmit timing values and/or receive timing values, or each CC group corresponds to a plurality of links and a plurality of transmit timing values and/or receive timing values.

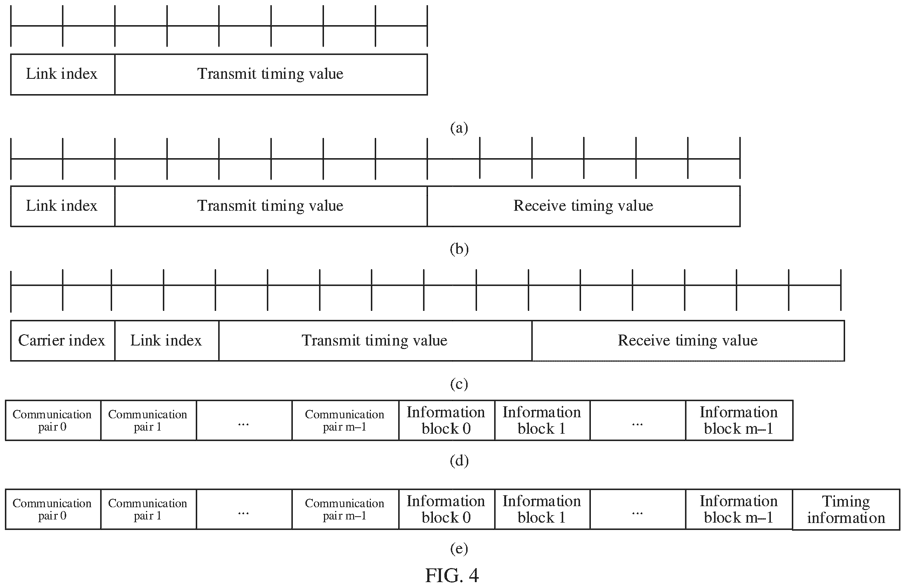

Based on the foregoing descriptions of the link and the indication information of the timing value, the following enumerates several examples of the mapping relationship information with reference to FIG. 4.

FIG. 4 is a diagram of the mapping relationship information according to this embodiment of this application.

Example 1: As shown in (a) in FIG. 4, the mapping relationship information may indicate the index of the link and the transmit timing value.

Example 2: As shown in (b) in FIG. 4, the mapping relationship information may indicate the index of the link, the transmit timing value, and the receive timing value.

Example 3: As shown in (c) in FIG. 4, the mapping relationship information may indicate a carrier index, the index of the link, the transmit timing value, and the receive timing value.

Example 4: As shown in (d) in FIG. 4, when the mapping relationship information indicates transmit timing values and/or receive timing values of a plurality of communication pairs, the communication pairs such as a communication pair 0, a communication pair 1, ..., and a communication pair m-1 may indicate communication devices corresponding to links (namely, sending devices and receiving devices that communicate through the links), and information blocks such as an information block 0, an information block 1, ..., and an information block m-1 may indicate the transmit timing values and/or the receive timing values of the corresponding communication pairs. In other words, the information block one-to-one corresponds to the communication pair.

It should be understood that, the information block further indicates a parameter, for example, a modulation and coding scheme (modulation and coding scheme, MCS) or a time-frequency resource, that is used by the corresponding communication pair during communication.

Example 5: As shown in (e) in FIG. 4, when the mapping relationship information indicates transmit timing values and/or receive timing values of a plurality of communication pairs, the communication pairs such as a communication pair 0, a communication pair 1, ..., and a communication pair m-1 may indicate communication devices, and timing information may indicate the transmit timing values and/or the receive timing values of these communication pairs. The timing information is a list of transmit timing values and/ receive timing values, in other words, the transmit timing values and/or the receive timing values of the communication pair 0 to the communication pair m-1 may form a list in order and be stored in the timing information.

In this case, the information block indicates only a parameter, for example, an MCS or a time-frequency resource, that is used by a corresponding communication pair during communication.

The obtaining mapping relationship information in S301 may specifically include: determining the mapping relationship information, or receiving the mapping relationship information.

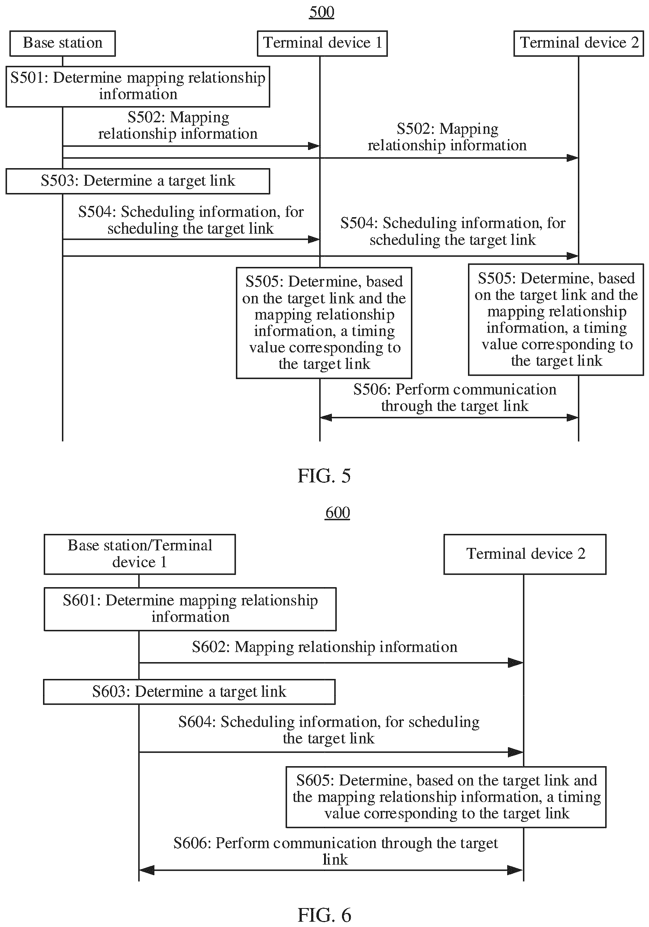

In other words, the mapping relationship information may be autonomously determined by the communication device. For example, the communication device is the network device. Alternatively, the mapping relationship information may be received from another device that configures the mapping relationship information. For example, the communication device is the terminal device, and the terminal device receives the mapping relationship information from the network device. The following describes this process in detail with reference to FIG. 5 and FIG. 6, and details are not described herein.

S302: Determine, based on a scheduled target link and the mapping relationship information, a timing value corresponding to the target link.

After obtaining the mapping relationship information, the communication device may search the mapping relationship information for a transmit timing value and/or a receive timing value on the target link based on the scheduled target link. For example, as shown in FIG. 2, assuming that the terminal device 1 obtains the mapping relationship information, and determines that the target link is the link 3, the terminal device 1 may determine, in the mapping relationship information, the transmit timing value and/or the receive timing value of the terminal device 1 on the link 3.

The target link is a scheduled link on which communication needs to be performed, and the target link may be any type of link. The target link may be determined in the following two manners as examples.

In an example, the terminal device determines the scheduled target link.

For example, as shown in FIG. 2, it is assumed that the terminal device 1 obtains the mapping relationship information, and the mapping relationship information indicates transmit timing values and/or receive timing values of the terminal device 1 on the link 1, the link 3, the link 11, the link 12, and the link 13. If the terminal device 1 expects to communicate with the terminal device 2, the terminal device 1 may autonomously determine that the scheduled target link is the link 2.

In another example, the target link is determined based on scheduling information. The scheduling information carries an index of the target link, and may be obtained from the network device.

For example, as shown in FIG. 2, assuming that the network device (for example, the base station) expects to enable the terminal device 1 to communicate with the terminal device 2, the network device may generate scheduling information, where a link index carried in the scheduling information is the link 3. The network device sends the scheduling information to the terminal device 1 and the terminal device 2. After obtaining the scheduling information, the terminal device 1 and the terminal device 2 may determine, based on the link index indicated by the scheduling information, that the target link is the link 3.

S303: Perform communication through the target link based on the timing value.

After determining, based on the mapping relationship information, the transmit timing value and/or the receive timing value, namely, $T_A$, corresponding to the target link, the communication device may determine $K_{offset}$ by using the absolute-value indication formula or the relative-value indication formula in S301, and then determine a communication scenario, for example, data transmission timing and data transmit timing. A time domain resource for sending and/or a time domain resource for receiving to be performed by the communication device on the target link may be determined based on $K_{offset}$ by using a formula in the corresponding communication scenario, so that the communication can be implemented on the target link through the determined time domain resource for sending and/or the determined time domain resource for receiving.

According to the foregoing solution, the communication device obtains the preconfigured mapping relationship information indicating the mapping relationship between the at least one link and the at least one group of timing values, to determine the corresponding timing value on the target link based on the scheduled target link and the mapping relationship information, so that the communication can be implemented on the target link based on the timing value. A timing value on each link is preconfigured, to be specific, before the communication device accesses a link, a corresponding timing value has been configured for each link that may be accessed. Therefore, during inter-link switching, the communication device does not need to obtain receive/transmit timing on the link through uplink and downlink synchronization, network scheduling, or the like when accessing the link. This can greatly reduce a switching delay, implement fast switching between different links, and meet more service requirements.

To better understand the communication method provided in this application, the following describes the communication method in this application from different scenarios with reference to FIG. 5 and FIG. 6.

FIG. 5 is another schematic flowchart of a communication method according to an embodiment of this application. The method 500 shown in FIG. 5 may include S501 to S506. In the embodiment shown in FIG. 5, a target link may be for communication between the terminal device 1 and the terminal device 2, the target link may be scheduled by a network device (for example, the base station), and the network device may further separately configure mapping relationship information for the terminal device 1 and the terminal device 2 before scheduling the target link.

In the embodiment shown in FIG. 5, as a device that configures the mapping relationship information and schedules the target link, the base station may be used as an example of a second communication device; and as devices that perform communication through the target link, the terminal device 1 and the terminal device 2 may be used as examples of a first communication device.

It should be understood that the terminal device 1 may be a sending device, and the terminal device 2 may be a receiving device; or the terminal device 1 is a receiving device, and the terminal device 2 is a sending device.

It should be further understood that the target link may be for unicast communication, or may be for multicast communication.

The unicast communication is communication between two devices. For example, unicast communication between the terminal device 1 and the terminal device 2 shown in FIG. 2 may be performed through the link 3 connected between the terminal device 1 and the terminal device 2. At least one link indicated in the mapping relationship information configured by the second communication device may be for the unicast communication between the two devices.

The multicast communication may be communication between one device and a plurality of devices. A sending device may be referred to as a source device, a receiving device may be referred to as a target device, and a communication device group (referred to as a communication group for short below) may include a plurality of target devices. The communication group may include the source device and the target device. The at least one link indicated in the mapping relationship information configured by the second communication device may be for communication between the source device or the target device in the communication group.

Based on the foregoing definition of the multicast communication, a plurality of devices may be grouped into different communication groups. One communication group may include a source device and a target device.

Using FIG. 2 as an example, in an example, a communication group 1 may include the terminal device 1, the terminal device 11, the terminal device 12, and the terminal device 13; and a communication group 2 may include the terminal device 2, the terminal device 21, and the terminal device 22. Because a distance between devices in a communication group is short, a transmission delay caused by the transmission distance may not be considered for communication between the devices in the communication group. A transmission delay needs to be considered for communication between devices in different communication groups, and the devices in the communication group may share a same transmit timing value and/or a same receive timing value.

The multicast communication may alternatively be communication between devices that are grouped into one communication group, and the communication group may include a plurality of devices that may communicate with each other. The target link may be for communication between two or more devices in the communication group.

Based on the foregoing definition of the multicast communication, a plurality of devices may alternatively be grouped into different communication groups.

Still using FIG. 2 as an example, in an example, a communication group 1 may include the base station and/or the terminal device 2, the terminal device 1, the terminal device 11, the terminal device 12, and the terminal device 13; and a communication group 2 may include the base station and/or the terminal device 1, the terminal device 2, the terminal device 21, and the terminal device 22. In other words, one device may belong to a plurality of communication groups. For example, the base station, the terminal device 1, and the terminal device 2 may belong to both the communication group 1 and the communication group 2. In this example, a transmission distance between devices and a transmission delay corresponding to the transmission distance are considered. For communication between any two devices, a time domain position for sending and/or a time domain position for receiving may be determined based on a transmit timing value and/or a receive timing value corresponding to each device.

It should be understood that one device may belong to only one communication group, or may belong to a plurality of communication groups. The unicast communication may alternatively be implemented between a plurality of devices in the communication group.

It should be further understood that the foregoing two methods for obtaining the communication group through grouping are merely examples, and should not constitute any limitation on this application.

The steps in FIG. 5 are described in detail below.

S501: The base station determines the mapping relationship information, where the mapping relationship information indicates a mapping relationship between at least one link and at least one group of timing values, and each group of timing values includes at least one transmit timing value and/or at least one receive timing value.

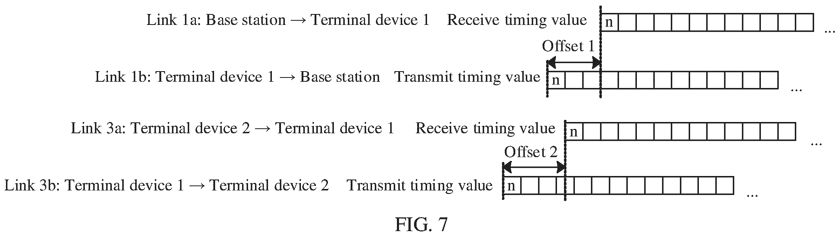

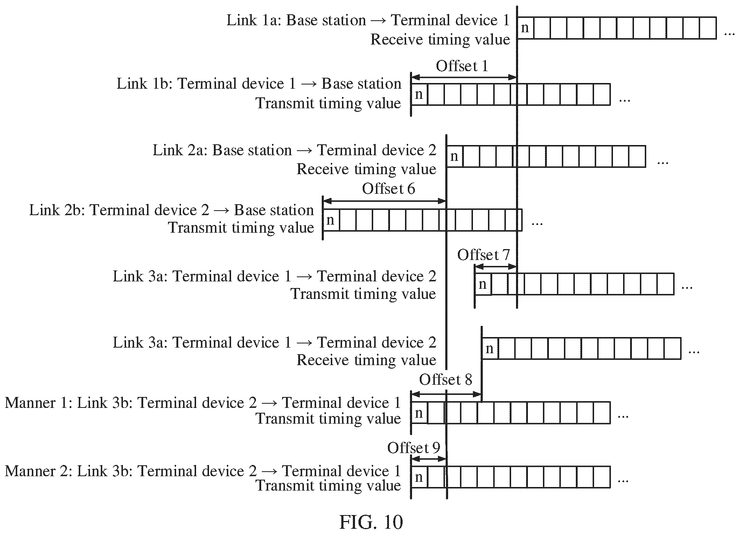

With reference to FIG. 7 to FIG. 10, the following uses the unicast communication and the multicast communication as examples to separately describe a process in which the base station indicates transmit timing values and/or receive timing values corresponding to different links. FIG. 7 to FIG. 9 are examples of indicating the mapping relationship information in a unicast scenario, and FIG. 10 is an example of determining the mapping relationship information in a multicast scenario.

It should be understood that, for related descriptions of the at least one link indicated by the mapping relationship information, refer to the descriptions in the method 300. Details are not described again.

It should be further understood that, in the following example, for ease of differentiation and description, links in different directions are distinguished by using a and b. For example, a link 1a represents a direction from the base station to the terminal device 1, in other words, the base station → the terminal device 1. For the terminal device 1, a receive timing value needs to be determined. A link 1b represents a direction from the terminal device to the base station, in other words, the terminal device 1 → the base station. For the terminal device 1, a transmit timing value needs to be determined. Other links may also be understood based on this example, and details are not described herein.

With reference to the accompanying drawings, the following first describes a process of determining the timing value in the unicast scenario. In example descriptions of FIG. 7 to FIG. 9, the link 1 and the link 3 in FIG. 2 are used as examples for description. The link 1 is a communication link between the base station and the terminal device 1, and the link 3 is a communication link between the terminal device 1 and the terminal device 2. A direction of the link 1a is from the base station to the terminal device 1, a direction of the link 1b is from the terminal device 1 to the base station, a direction of the link 3a is from the terminal device 2 to the terminal device 1, and a direction of the link 3b is from the terminal device 1 to the terminal device 2.

It should be understood that FIG. 7 to FIG. 9 are all described from a perspective of the terminal device 1.

FIG. 7 is a diagram of indicating, in the unicast scenario, a timing value on a link that has been synchronously accessed according to this embodiment of this application. Both the link 1a and the link 3a are links that have been synchronously accessed by the terminal device 1.

As shown in FIG. 7, for the link 1a that has been synchronously accessed, because the terminal device 1 may receive a synchronization signal from the base station, the terminal device 1 may autonomously determine a receive timing value of the terminal device 1 on the link 1. Therefore, the base station may indicate a transmit timing value of the terminal device 1 on the link 1b. To be specific, when the base station indicates the transmit timing value of the terminal device 1 on the link 1b, the link 1a may be used as a reference link, and the receive timing value of the terminal device 1 on the link 1a is used as a reference point, to indicate an offset 1 of the transmit timing value of the terminal device 1 on the link 1b relative to the reference point. Therefore, the transmit timing value of the terminal device 1 on the link 1b is indirectly indicated.

It should be understood that if the base station expects to indicate the transmit timing value of the terminal device 1 on the link 1b, the base station needs to learn of the receive timing value of the terminal device 1 on the link 1a. For a manner in which the base station determines the receive timing value of the terminal device 1 on the link 1a, refer to the related descriptions in the method 300.

For the link 3a that has been synchronously accessed by the terminal device 1, because the terminal device 1 may receive a synchronization signal from the terminal device 2, the terminal device 1 may autonomously determine a receive timing value of the terminal device 1 on the link 3a. Therefore, the base station may indicate a transmit timing value of the terminal device 1 on the link 3b. To be specific, when the base station indicates the transmit timing value of the terminal device 1 on the link 3b, the link 3a may be used as a reference link, and the receive timing value of the terminal device 1 on the link 3a is used as a reference point, to indicate an offset 2 of the transmit timing value of the terminal device 1 on the link 3b relative to the reference point. Therefore, the transmit timing value of the terminal device 1 on the link 3b is indirectly indicated.

It should be understood that the base station may estimate a propagation delay between the terminal device 1 and the terminal device 2 based on a distance between the terminal device 1 and the terminal device 2, to estimate the receive timing value of the terminal device 1 on the link 3a.

Therefore, for a link that has been synchronously accessed by a device, the link that has been synchronously accessed by the device may be used as a reference link, to indicate an offset of a transmit timing value of the device on another link relative to a receive timing value of the device on the reference link.

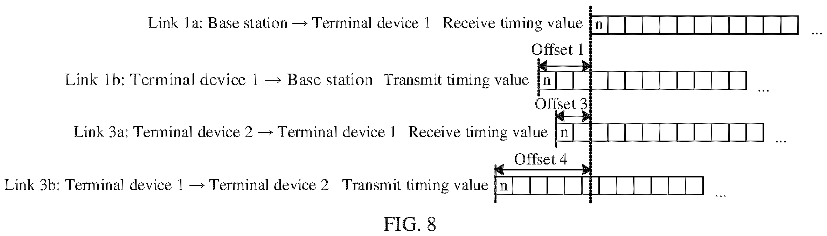

FIG. 8 is a diagram of indicating, in the unicast scenario, a timing value on a link that has not been synchronously accessed according to this embodiment of this application. The link 1a is a link that has been synchronously accessed by the terminal device 1, and the link 3a and the link 3b are links that have not been synchronously accessed by the terminal device 1.

As shown in FIG. 8, for the link 1a that has been synchronously accessed, the base station may indicate a transmit timing value of the terminal device 1 on the link 1b in a manner the same as that in FIG. 7. In other words, a receive timing value of the terminal device 1 on the link 1a is used as a reference point to indicate an offset 1 of the transmit timing value of the terminal device 1 on the link 1b relative to the reference point.

For the link 3a that has not been synchronously accessed, when the base station indicates a receive timing value of the terminal device 1 on the link 3a, because the base station may determine the receive timing value of the terminal device 1 on the link 1a that has been synchronously accessed, the link 1a may be used as a reference link, and the receive timing value of the terminal device 1 on the link 1a is used as a reference point, to indicate an offset 3 of the receive timing value of the terminal device 1 on the link 3a relative to the reference point.

For the link 3b that has not been synchronously accessed, when the base station indicates a transmit timing value of the terminal device 1 on the link 3b, because the base station may determine the receive timing value of the terminal device 1 on the link 1a that has been synchronously accessed, the link 1a may also be used as a reference link, and the receive timing value of the terminal device 1 on the link 1a is used as a reference point, to indicate an offset 4 of the transmit timing value of the terminal device 1 on the link 3b relative to the reference point.

It should be understood that, for a process in which the base station determines the receive timing value of the terminal device 1 on the link 1 that has been synchronously accessed, refer to the foregoing descriptions.

Therefore, for a link that has not been synchronously accessed by a device, a link that has been synchronously accessed by the device may be used as a reference link, to indicate an offset of a transmit timing value and/or a receive timing value of the device on the link that has not been synchronously accessed relative to a timing value on the reference link.

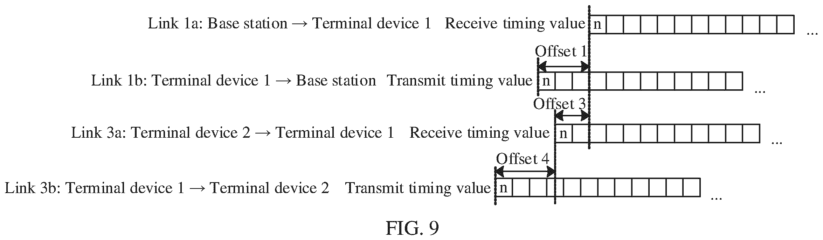

FIG. 9 is another diagram of indicating, in the unicast scenario, a timing value on a link that has not been synchronously accessed according to this embodiment of this application. The link 1a is a link that has been synchronously accessed by the terminal device 1, and the link 3a and the link 3b are links that have not been synchronously accessed by the terminal device 1.

It should be understood that a manner of indicating a transmit timing value of the terminal device 1 on the link 1a and a manner of indicating a receive timing value of the terminal device 1 on the link 3a are the same as those in FIG. 8. Details are not described herein again.

For the link 3b that has not been synchronously accessed, when the base station indicates a transmit timing value of the terminal device 1 on the link 3b, because the base station has indicated the receive timing value of the terminal device 1 on the link 3a, the link 3a may also be used as a reference link, and the receive timing value of the terminal device 1 on the link 3a is used as a reference point, to indicate an offset 4 of the transmit timing value of the terminal device 1 on the link 3b relative to the reference point.

Therefore, for a link that has not been synchronously accessed by a device, a link that has not been synchronously accessed by the device may alternatively be used as a reference link, to indicate an offset of a transmit timing value of the device on the link that has not been synchronously accessed relative to a timing value on the reference link.

The following further describes a process of determining the timing value in the multicast scenario.

In example descriptions of FIG. 10, the link 1, the link 2, and the link 3 in FIG. 2 are used as examples for description. The link 1 is a communication link between the base station and the terminal device 1, the link 2 is a communication link between the base station and the terminal device 2, and the link 3 is a communication link between the terminal device 1 and the terminal device 2. A direction of the link 1a is from the base station to the terminal device 1, a direction of the link 1b is from the terminal device 1 to the base station, a direction of the link 2a is from the base station to the terminal device 2, and a direction of the link 2b is from the terminal device 2 to the base station. A direction of the link 3a is from the terminal device 2 to the terminal device 1, and a direction of the link 3b is from the terminal device 1 to the terminal device 2.

It should be understood that FIG. 10 is described from perspectives of the terminal device 1 and the terminal device 2. FIG. 10 is a diagram of determining a timing value on a link in the multicast scenario according to this embodiment of this application. The link 1a is a link that has been synchronously accessed by the terminal device 1, and the link 2a is a link that has been synchronously accessed by the terminal device 2.

For the link 1a that has been synchronously accessed by the terminal device 1, because the terminal device 1 may receive a synchronization signal from the base station, the terminal device 1 may autonomously determine a receive timing value of the terminal device 1 on the link 1a. Therefore, the base station may indicate a transmit timing value of the terminal device 1 on the link 1b. To be specific, when the base station indicates the transmit timing value of the terminal device 1 on the link 1b, the link 1a may be used as a reference link, and the receive timing value of the terminal device 1 on the link 1a is used as a reference point, to indicate an offset 1 relative to the reference point. Therefore, the transmit timing value of the terminal device 1 on the link 1b is indirectly indicated.

For the link 2a that has been synchronously accessed by the terminal device 2, because the terminal device 2 may receive a synchronization signal from the base station, the terminal device 2 may autonomously determine a receive timing value of the terminal device 2 on the link 2a. Therefore, the base station may indicate a transmit timing value of the terminal device 2 on the link 2b. To be specific, when the base station indicates the transmit timing value of the terminal device 2 on the link 2b, the link 2a may be used as a reference link, and the receive timing value of the terminal device 2 on the link 2a is used as a reference point, to indicate an offset 6 relative to the reference point. Therefore, the transmit timing value of the terminal device 2 on the link 2b is indirectly indicated.

It should be understood that, to indicate the transmit timing value of the terminal device 1 on the link 1b and the transmit timing value of the terminal device 2 on the link 2b, the base station needs to learn of the receive timing value of the terminal device 1 on the link 1a and the receive timing value of the terminal device 2 on the link 2a. For specific determining manners corresponding to the receive timing values, refer to the foregoing descriptions.

When the terminal device 1 and the terminal device 2 have not synchronously accessed the link 3a and the link 3b, and the base station indicates a transmit timing value of the terminal device 1 on the link 3a, because the base station may determine the receive timing value of the terminal device 1 on the link 1a, the link 1a may be used as a reference link, and the receive timing value of the terminal device 1 on the link 1a is used as a reference point, to indicate an offset 7 of the transmit timing value of the terminal device 1 on the link 3a relative to the reference point.

After determining the transmit timing value on the link 3a, the terminal device 1 may send a synchronization signal based on the transmit timing value. Because the terminal device 2 may receive the synchronization signal from the terminal device 1, the terminal device 2 may autonomously determine a receive timing value of the terminal device 2 on the link 3a. Similarly, the base station may also determine the receive timing value of the terminal device 2 on the link 3a.

Then, the base station may indicate a transmit timing value of the terminal device on the link 3b. The base station may indicate the transmit timing value of the terminal device 2 on the link 3b in the following two manners.

Manner 1: Because the base station may determine the receive timing value of the terminal device 2 on the link 3a, the link 3a may be used as a reference link, and the receive timing value of the terminal device 2 on the link 3a is used as a reference point, to indicate an offset 8 of the transmit timing value of the terminal device 2 on the link 3b relative to the reference point.

Manner 2: Because the base station may also determine the receive timing value of the terminal device 2 on the link 2a, the link 2 may be used as a reference link, and the receive timing value of the terminal device 2 on the link 2a is used as a reference point, to indicate an offset 9 of the transmit timing value of the terminal device 2 on the link 3b relative to the reference point.

It should be understood that, for a specific manner in which the base station determines the receive timing value of the terminal device 2 on the link 3a or the receive timing value of the terminal device 2 on the link 2a, refer to related descriptions in the method 300.

Further, the network device may use, based on a distance status between devices in the communication group, different manners of indicating the timing value.

In an example, when a link distance between the devices in the communication group is long, the network device (for example, the base station) may correspondingly indicate a timing value (a transmit timing value and/or a receive timing value) for a terminal device on each link in the communication group, in other words, devices in a same communication group use different timing values for communication.

In another example, when a distance between the devices in the communication group is short or even a transmission delay may be ignored, the network device may correspondingly indicate a timing value for each communication group, in other words, devices in a same communication group use a same timing value for communication, and different communication groups use different timing values for communication.

For example, in FIG. 2, it is assumed that communication groups are obtained through grouping as follows: A communication group 1 includes the terminal device 1, the terminal device 11, the terminal device 12, and the terminal device 13. A communication group 2 includes the terminal device 2, the terminal device 21, and the terminal device 22.

If a distance between the terminal device 1 and each of the terminal device 11, the terminal device 12, and the terminal device 13 in the communication group 1 is very short, in other words, lengths of the link 11, the link 12, and the link 13 are very short, the base station may indicate only one group of timing values for the communication group 1. Therefore, a same transmit timing value and/or a same receive timing value are/is used for communication between the terminal device 1 and the terminal device 11, between the terminal device 1 and the terminal device 12, and between the terminal device 1 and the terminal device 13.

If a distance between the terminal device 2 and each of the terminal device 21 and the terminal device 22 in the communication group 2 is long, in other words, lengths of the link 21 and the link 22 are long, the base station separately indicates transmit timing values and receive timing values of the terminal device 2 and the terminal device 21 on the link 21, and also separately indicates transmit timing values and receive timing values of the terminal device 2 and the terminal device 22 on the link 22.

If the communication group 1 communicates with the communication group 2, the devices in the communication group 1 communicate with the communication group 2 by using a same timing value. In this case, the devices in the communication group 2 communicate with the communication group 1 by using respectively corresponding timing values.

S502: The base station sends the mapping relationship information. Correspondingly, the terminal device 1 and the terminal device 2 receive the mapping relationship information.

When sending the mapping relationship information, the base station may send the mapping relationship information in different manners.

In an example, the mapping relationship information is carried in higher-layer signaling for sending. In other words, the terminal device 1 and the terminal device 2 receive the higher-layer signaling.

The higher-layer signaling may be radio resource control (radio resource control, RRC) signaling, media access control (media access control, MAC) layer signaling, or the like.

In the unicast scenario, the higher-layer signaling is scrambled by using an RNTI of a communication device, and the communication device is a device that performs communication through the target link. It should be understood that, in the method 500, the target link is the link 3 in FIG. 2, and the communication device is the terminal device 1 and the terminal device 2.

In the multicast scenario, the higher-layer signaling is scrambled by using an RNTI of a communication device group, and the communication device group includes a device that performs communication through any one of the at least one link. For example, the communication device group may be the communication group 1 that includes the terminal device 1, the terminal device 11, the terminal device 12, and the terminal device 12 in FIG. 2.

In another example, the mapping relationship information is carried in physical-layer signaling for sending. In other words, the terminal device 1 and the terminal device 2 receive the physical-layer signaling.

The physical-layer signaling may be RxCI.

In the unicast scenario, the mapping relationship information carried in the physical-layer signaling indicates a mapping relationship between one link and one group of timing values. To be specific, the mapping relationship information may indicate an index of one link and/or identifiers of a communication pair corresponding to the link, and timing values of the communication pair or offsets of the communication pair relative to a timing value on a reference link.

In the multicast scenario, the mapping relationship information carried in the physical-layer signaling indicates a mapping relationship between a plurality of links and a plurality of groups of timing values. To be specific, the mapping relationship information may indicate an index of each link in each communication group and/or identifiers of a communication pair corresponding to the link, and timing values of the communication pair or offsets of the communication pair relative to a timing value on a reference link.

S503: The base station determines the target link.

The base station may use a to-be-scheduled link as the target link. For example, if the base station expects to schedule a link between the terminal device 1 and the terminal device 2 for communication between the terminal device 1 and the terminal device 2, the base station may determine that the target link is the link 3 in FIG. 2.

S504: The base station sends scheduling information, where the scheduling information indicates the target link. Correspondingly, the terminal device 1 and the terminal device 2 receive the scheduling information.

After determining the target link, the base station may include an index of the target link or identifiers of a communication pair on the target link in the scheduling information for sending, so that communication devices on the target link receive the scheduling information.

For example, the base station sends the scheduling information to the terminal device 1 and the terminal device 2, where the scheduling information carries the index of the target link, namely, the link 3, or carries the identifiers of the communication pair, namely, the terminal device 1 and the terminal device 2.

It should be understood that when the mapping relationship information is carried in the physical-layer signaling for sending, the base station may include both the mapping relationship information and the index of the target link in the mapping relationship information for sending, in other words, the base station does not send the scheduling information. In this case, the mapping relationship information not only indicates the mapping relationship between the at least one link and the at least one group of timing values, but also indicates the scheduled target link.

Therefore, in the method 500, S501 to S504 may be sequentially performed, or S501 to S504 may be replaced with a sequence of S501, S503, and S502. In other words, the mapping relationship information and the scheduling information may be carried in same signaling for sending.

S505: The terminal device 1 and the terminal device 2 determine, based on the scheduled target link and the mapping relationship information, a timing value corresponding to the target link.

The terminal device 1 and the terminal device 2 may determine, in the mapping relationship information based on the index of the target link, a transmit timing value and a receive timing value that correspond to the terminal device on the target link. The transmit timing value and/or the receive timing value may be directly indicated, or may be indicated by using a difference.

For example, it is assumed that the terminal device 1 is a sending device, and the terminal device 2 is a receiving device. The terminal device 1 may determine, based on the mapping relationship information, a transmit timing value $T_{ATx}$ of the terminal device 1 on the target link, namely, the link 3, or an offset A of the transmit timing value $T_{ATx}$ relative to the timing value on the reference link. The terminal device 2 may also determine, based on the mapping relationship information, a receive timing value $T_{BRx}$ of the terminal device 2 on the link 3 or an offset B of the receive timing value $T_{BRx}$ relative to the timing value on the reference link. The terminal device 1 may calculate the transmit timing value $T_{ATx}$ based on the timing value on the reference link and the offset A, and the terminal device 2 may also calculate the receive timing value $T_{BRx}$ based on the timing value on the reference link and the offset B.

S506: The terminal device 1 and the terminal device 2 communicate with each other through the target link based on the timing value.

The terminal device 1 and the terminal device 2 may further determine, based on the determined transmit timing value and receive timing value, a time domain resource for sending and a time domain resource for receiving, so that the communication on the target link can be implemented through the determined time domain resources.

For example, after determining the transmit timing value $T_{ATx}$, the terminal device 1 may determine $K_{offset}$ according to the absolute-value indication formula or the relative-value indication formula in the method 300. Assuming that a communication scenario of the terminal device 1 is data transmit timing, to be specific, the transmit timing value is for determining a time domain position for sending data, a time domain position for sending the data by the terminal device 1 on the link 3 may be determined based on the following algorithm:

$$\left\lfloor n \cdot \frac{2^{\mu_{PUSCH}}}{2^{\mu_{PDCCH}}} \right\rfloor + K_2 + K_{offset}$$

Similarly, the terminal device 2 may also determine, in a same manner, a time domain position for receiving the data by the terminal device 2 on the link 3.

Therefore, the terminal device 1 and the terminal device 2 may communicate on the link 3 at the determined time domain position for sending the data and the determined time domain position for receiving the data.

Optionally, the method may further include: The base station sends the timing value on the reference link. Correspondingly, the terminal device 1 and the terminal device 2 obtain the timing value on the reference link.

It can be learned from the foregoing descriptions that the base station may autonomously determine the timing value on the reference link, for example, may determine a receive timing value on a link that has been synchronously accessed. Therefore, the base station may send the determined timing value on the reference link to the terminal device, and the terminal device does not need to autonomously determine the timing value on the reference link.

In the method 500, an execution sequence of the steps may be determined according to internal logic of the steps. The steps shown in the figure are merely examples, and should not constitute any limitation on the execution sequence. For example, S503 may be performed before S502.

According to the foregoing solution, the base station preconfigures, for the terminal device 1 and the terminal device 2, the mapping relationship information indicating the mapping relationship between the at least one link and the at least one group of timing values. When a new link is scheduled, the terminal device 1 and the terminal device 2 may determine a corresponding timing value based on the mapping relationship information, to implement communication based on the timing value. A timing value on each link is preconfigured, to be specific, before the terminal device 1 and the terminal device 2 access a link, the base station has configured a corresponding timing value for each link that may be accessed by the two terminal devices. Therefore, during inter-link switching, the terminal device 1 and the terminal device 2 do not need to obtain receive/transmit timing on the link through uplink and downlink synchronization, network scheduling, or the like when accessing the link. This can greatly reduce a switching delay, implement fast link switching and multi-link communication, improve communication performance, and meet more service requirements. In addition, because the timing value on the link may be configured by the base station, in other words, time domain resource allocation is determined by the base station, flexible resource allocation can be implemented.

FIG. 6 is another schematic flowchart of a communication method according to an embodiment of this application.

The method 600 shown in FIG. 6 may include S601 to S606. In the embodiment shown in FIG. 6, a target link may be for communication between the base station and the terminal device 2, or may be for communication between the terminal device 1 and the terminal device 2.

When the target link is for the communication between the base station and the terminal device 2, the target link may be scheduled by the base station, and the base station may further configure mapping relationship information for the terminal device 2 before scheduling the target link. It should be understood that the target link is the link 2 in FIG. 2.

When the target link is for the communication between the terminal device 1 and the terminal device 2, the target link may be scheduled by the terminal device 1, and the terminal device 1 may further configure mapping relationship information for the terminal device 2 before scheduling the target link. It should be understood that the target link is the link 3 in FIG. 2.

In this application, the scheduling of the target link and the configuration of the mapping relationship information may be performed by different devices. For example, the base station may configure the mapping relationship information, and the terminal device 1 may schedule the target link. Alternatively, the terminal device 1 may configure the mapping relationship information, and the base station may schedule the target link. In other words, the base station may perform S601 and S602, and the terminal device 1 may perform S603 and S604. Alternatively, the terminal device 1 may perform S601 and S602, and the base station may perform S603 and S604.

In the embodiment shown in FIG. 6, as a device that configures the mapping relationship information and schedules the target link, the base station or the terminal device 1 may be used as an example of a second communication device; and as devices that perform communication through the target link, the terminal device 1 and the terminal device 2 may be used as examples of a first communication device. In other words, the terminal device 1 may be configured to implement functions of the first communication device and the second communication device.

The steps in FIG. 6 are described in detail below.

S601: The base station/terminal device 1 determines the mapping relationship information, where the mapping relationship information indicates a mapping relationship between at least one link and at least one group of timing values, and each group of timing values includes at least one transmit timing value and/or at least one receive timing value.

When the base station determines the mapping relationship information, the mapping relationship information may indicate transmit timing values and/or receive timing values of a communication pair on the link 2. When the terminal device 1 determines the mapping relationship information, the mapping relationship information may indicate transmit timing values and/or receive timing values of a communication pair on the link 3.

The transmit timing value and/or the receive timing value may be indicated depending on whether a link is a link that has been synchronously accessed. This is similar to the method 500. Similarly, the timing value may be directly indicated or indicated by using a difference.

S602: The base station/terminal device 1 sends the mapping relationship information. Correspondingly, the terminal device 2 receives the mapping relationship information.

S603: The base station/terminal device 1 determines the target link.

For example, when the base station expects to schedule a link between the base station and the terminal device 2 to implement communication between the base station and the terminal device 2, it may be determined that the target link is the link 2 in FIG. 2. When the terminal device 1 expects to schedule a link between the terminal device 1 and the terminal device 2 to implement communication between the terminal device 1 and the terminal device 2, it may be determined that the target link is the link 3 in FIG. 2.

S604: The base station/terminal device 1 sends scheduling information, where the scheduling information is for scheduling the target link. Correspondingly, the terminal device 2 receives the scheduling information.

When the mapping relationship information is carried in physical-layer signaling for sending, the base station/terminal device 1 may include both the mapping relationship information and an index of the target link in the mapping relationship information for sending. This is similar to the method 500.

Therefore, the method 600 may also be sequentially performed in a sequence of S601 to S604, or S601 to S604 may be replaced with a sequence of S601, S603, and S602. In other words, the mapping relationship information and the scheduling information may be carried in same signaling for sending.

S605: The terminal device 2 determines a timing value on the target link based on the scheduled target link and the mapping relationship information.

The terminal device 2 may determine, in the mapping relationship information based on the index of the target link, a transmit timing value and/or a receive timing value of the terminal device 2 on the target link.

It should be understood that because the mapping relationship information is configured by the base station/terminal device 1, regardless of whether the terminal device 2 communicates with the base station or the terminal device 1, the base station/terminal device 1 may locally determine a transmit timing value and/or a receive timing value of the base station/terminal device 1 on the target link.

S606: The terminal device 2 performs communication through the target link based on the timing value.

Similarly, after determining a time domain resource based on the timing value by using a corresponding algorithm, the terminal device 2 may communicate with the base station/terminal device 1 through the target link.

It should be understood that an implementation process of the method 600 is similar to implementation processes of the method 300 and the method 500. For a specific implementation of the method 600, refer to the implementation processes of the method 300 and the method 500. Details are not described herein again.

According to the foregoing solution, the base station or the terminal device 1 preconfigures, for the terminal device 2, the mapping relationship information indicating the mapping relationship between the at least one link and the at least one group of timing values. When a new link is scheduled, the terminal device 2 may determine a corresponding timing value based on the mapping relationship information, to implement communication based on the timing value. A timing value on each link is preconfigured, to be specific, before the terminal device 2 accesses a link, the base station or the terminal device 1 has configured a corresponding timing value for each link that may be accessed by the terminal device 2. Therefore, during inter-link switching, the terminal device 2 does not need to obtain receive/transmit timing on the link through uplink and downlink synchronization, network scheduling, or the like when accessing the link. This can greatly reduce a switching delay, implement fast link switching and multi-link communication, improve communication performance, and meet more service requirements. In addition, because the timing value on the link may be configured by the base station/terminal device 1, in other words, time domain resource allocation is determined by the base station/terminal device 1, flexible resource allocation can be implemented.

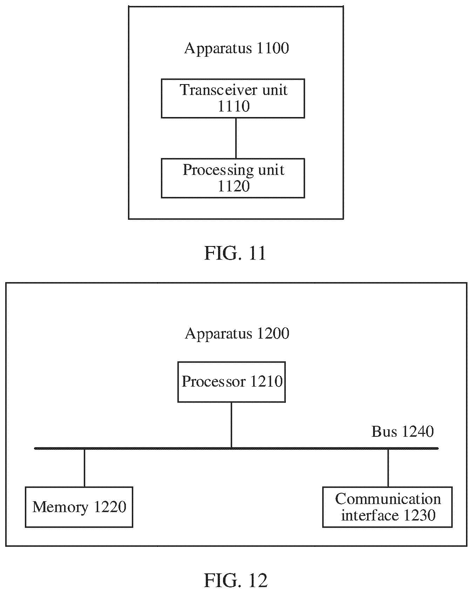

The method provided in embodiments of this application is described in detail above with reference to FIG. 3 to FIG. 10. Apparatuses provided in embodiments of this application are described in detail below with reference to FIG. 11 and FIG. 12.

FIG. 11 is a block diagram of a communication apparatus 1100 according to an embodiment of this application. The communication apparatus 1100 may correspond to the communication device in the method embodiments. This is not limited in embodiments of this application.

As shown in FIG. 11, the communication apparatus 1100 may include a transceiver unit 1110 and a processing unit 1120.

In an example, when the apparatus 1100 is the first communication device, the units in the apparatus 1100 may be configured to implement a corresponding procedure performed by the communication device in the method 300 shown in FIG. 3. For example, the transceiver unit 1110 may be configured to perform S301 in the method 300, and the processing unit 1120 may be configured to perform S302 and S303 in the method 300.

Alternatively, the units in the apparatus 1100 may be configured to implement corresponding procedures performed by the terminal device 1 and the terminal device 2 in the method 500 shown in FIG. 5. For example, the transceiver unit 1110 may be configured to perform S502 and S504 in the method 500, and the processing unit 1120 may be configured to perform S505 and S506 in the method 500. Alternatively, the units in the apparatus 1100 may be configured to implement a corresponding procedure performed by the terminal device 2 in the method 600 shown in FIG. 6. For example, the transceiver unit 1110 may be configured to perform S602, S604, and S606 in the method 600, and the processing unit may be configured to perform S605 in the method 600.

Specifically, the transceiver unit 1110 may be configured to obtain mapping relationship information, where the mapping relationship information indicates a mapping relationship between at least one link and at least one group of timing values, and each group of timing values includes at least one transmit timing value and/or at least one receive timing value. The processing unit 1120 may be configured to: determine, based on a scheduled target link and the mapping relationship information, a timing value corresponding to the target link; and perform communication through the target link based on the timing value.

Optionally, the transceiver unit 1110 may be specifically configured to receive the mapping relationship information, or determine the mapping relationship information.

Optionally, the transceiver unit 1110 may be specifically configured to receive higher-layer signaling, where the higher-layer signaling carries the mapping relationship information.

Optionally, the higher-layer signaling is scrambled by using a radio network temporary identifier RNTI of a communication device, and the communication device is a device that performs communication through the target link.

Optionally, the higher-layer signaling is scrambled by using an RNTI of a communication device group, and the communication device group includes a device that performs communication through any one of the at least one link.

Optionally, the transceiver unit 1110 may be specifically configured to receive physical-layer signaling, where the physical-layer signaling carries the mapping relationship information.

Optionally, the mapping relationship information indicates a mapping relationship between a plurality of links and a plurality of groups of timing values.

Optionally, when the mapping relationship information indicates the at least one link, the mapping relationship information specifically includes an index of each of the at least one link and/or identifiers of a communication pair corresponding to each of the at least one link, and each communication pair includes a sending device and a receiving device that perform communication through the corresponding link.

Optionally, when the mapping relationship information indicates the at least one group of timing values, the mapping relationship information specifically includes the at least one transmit timing value and/or the at least one receive timing value included in each of the at least one group of timing values.

Optionally, when the mapping relationship information indicates the at least one group of timing values, the mapping relationship information specifically includes an offset of the at least one transmit timing value and/or the at least one receive timing value included in each of the at least one group of timing values relative to a timing value on a reference link.

Optionally, the reference link is a link that has been synchronously accessed, and the reference link includes a link between a terminal device and a network device or a link between terminal devices.

Optionally, the transceiver unit 1110 may be specifically configured to obtain the timing value on the reference link.

Optionally, indication information that is in the mapping relationship information and that indicates the at least one group of timing values corresponds to a link type.

In another example, when the apparatus 1100 is the second communication device, the units in the apparatus 1100 may be configured to implement a corresponding procedure performed by the base station in FIG. 5. For example, the transceiver unit 1110 may be configured to perform S502 and S504 in the method 500, and the processing unit 1120 may be configured to perform S501 and S503 in the method 500.

Alternatively, the units in the apparatus 1100 may be configured to implement a corresponding procedure performed by the base station/terminal device 1 in FIG. 6. For example, the transceiver unit 1110 may be configured to perform S602, S604, and S606 in the method 600, and the processing unit 1120 may be configured to perform S601 and S603 in the method 600.

Specifically, the processing unit 1120 may be configured to determine mapping relationship information, where the mapping relationship information indicates a mapping relationship between at least one link and at least one group of timing values, and each group of timing values includes at least one transmit timing value and/or at least one receive timing value. The transceiver unit 1110 may be configured to send the mapping relationship information.

Optionally, the mapping relationship information is carried in higher-layer signaling.

Optionally, the higher-layer signaling is scrambled by using a radio network temporary identifier RNTI of a communication device, and the communication device is a device that performs communication through a target link.

Optionally, the higher-layer signaling is scrambled by using an RNTI of a communication device group, and the communication device group includes a device that performs communication through any one of the at least one link.

Optionally, the mapping relationship information is carried in physical-layer signaling.

Optionally, the mapping relationship information indicates a mapping relationship between a plurality of links and a plurality of groups of timing values.

Optionally, when the mapping relationship information indicates the at least one link, the mapping relationship information specifically includes an index of each of the at least one link and/or identifiers of a communication pair corresponding to each of the at least one link, and each communication pair includes a sending device and a receiving device that perform communication through the corresponding link.

Optionally, when the mapping relationship information indicates the at least one group of timing values, the mapping relationship information specifically includes the at least one transmit timing value and/or the at least one receive timing value included in each of the at least one group of timing values.

Optionally, when the mapping relationship information indicates the at least one group of timing values, the mapping relationship information specifically includes an offset of the at least one transmit timing value and/or the at least one receive timing value included in each of the at least one group of timing values relative to a timing value on a reference link.

Optionally, the reference link is a link that has been synchronously accessed, and the reference link includes a link between a terminal device and a network device or a link between terminal devices.

Optionally, the transceiver unit 1110 may be further configured to send the timing value on the reference link.

Optionally, indication information that is in the mapping relationship information and that indicates the at least one group of timing values corresponds to a link type.

It should be understood that in embodiments of this application, division into the units is an example and is merely logical function division. During actual implementation, there may be another division manner. In addition, functional units in embodiments of this application may be integrated into one processor, or may exist alone physically, or two or more units may be integrated into one unit. The integrated unit may be implemented in a form of hardware, or may be implemented in a form of a software functional unit.

FIG. 12 is another block diagram of a communication apparatus according to an embodiment of this application. The communication apparatus 1200 may be a chip system. In this embodiment of this application, the chip system may include a chip, or may include a chip and another discrete component.

As shown in FIG. 12, the apparatus 1200 may include at least one processor 1210.

In a possible design, the at least one processor 1210 may be configured to implement a function of the first communication device in the methods provided in embodiments of this application.

For example, when the apparatus 1200 is configured to implement the function of the first communication device in the methods provided in embodiments of this application, the processor 1210 may be configured to: obtain mapping relationship information, where the mapping relationship information indicates a mapping relationship between at least one link and at least one group of timing values, and each group of timing values includes at least one transmit timing value and/or at least one receive timing value; determine, based on a scheduled target link and the mapping relationship information, a timing value corresponding to the target link; and perform communication through the target link based on the timing value. For details, refer to the detailed descriptions in the method examples. The details are not described herein again.

In another possible design, the at least one processor 1210 may be configured to implement a function of the second communication device in the methods provided in embodiments of this application.

For example, when the apparatus 1200 is configured to implement the function of the second communication device in the methods provided in embodiments of this application, the processor 1210 may be configured to: determine mapping relationship information, where the mapping relationship information indicates a mapping relationship between at least one link and at least one group of timing values, and each group of timing values includes at least one transmit timing value and/or at least one receive timing value; and send the mapping relationship information. For details, refer to the detailed descriptions in the method examples. The details are not described herein again.

The apparatus 1200 may further include at least one memory 1220, configured to store program instructions and/or data. The memory 1220 is coupled to the processor 1210. The coupling in embodiments of this application may be an indirect coupling or a communication connection between apparatuses, units, or modules in an electrical form, a mechanical form, or another form, and is for information exchange between the apparatuses, the units, or the modules. The processor 1210 may perform a cooperative operation with the memory 1220. The processor 1210 may execute the program instructions stored in the memory 1220. At least one of the at least one memory may be included in the processor.

The apparatus 1200 may further include a communication interface 1230, configured to communicate with another device through a transmission medium, so that the apparatus 1200 may communicate with the another device. For example, when the apparatus 1200 is configured to implement a function of the network device in the methods provided in embodiments of this application, the another device may be the terminal device. When the apparatus 1200 is configured to implement a function of the terminal device in the methods provided in embodiments of this application, the another device may be the network device. The communication interface 1230 may be, for example, a transceiver, an interface, a bus, a circuit, or an apparatus that can implement receiving and sending functions. The processor 1210 may receive and send data and/or information through the communication interface 1230, and is configured to implement the method performed by the communication device in the embodiment corresponding to FIG. 3, FIG. 5, or FIG. 6, or may be configured to implement the method performed by the network device in the embodiment corresponding to FIG. 5 or FIG. 6.

A specific connection medium between the processor 1210, the memory 1220, and the communication interface 1230 is not limited in this embodiment of this application. In this embodiment of this application, the processor 1210, the memory 1220, and the communication interface 1230 are connected through a bus 1240 in FIG. 12. The bus 1240 is represented by a bold line in FIG. 12, and a manner of connecting other components is merely an example for description, and is not limited thereto. The bus may be classified into an address bus, a data bus, a control bus, and the like. For ease of representation, only one thick line is used to represent the bus in FIG. 12, but this does not mean that there is only one bus or only one type of bus.

It should be understood that the processor in this application may be an integrated circuit chip, and has a signal processing capability. In an implementation process, the steps in the foregoing method embodiments may be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

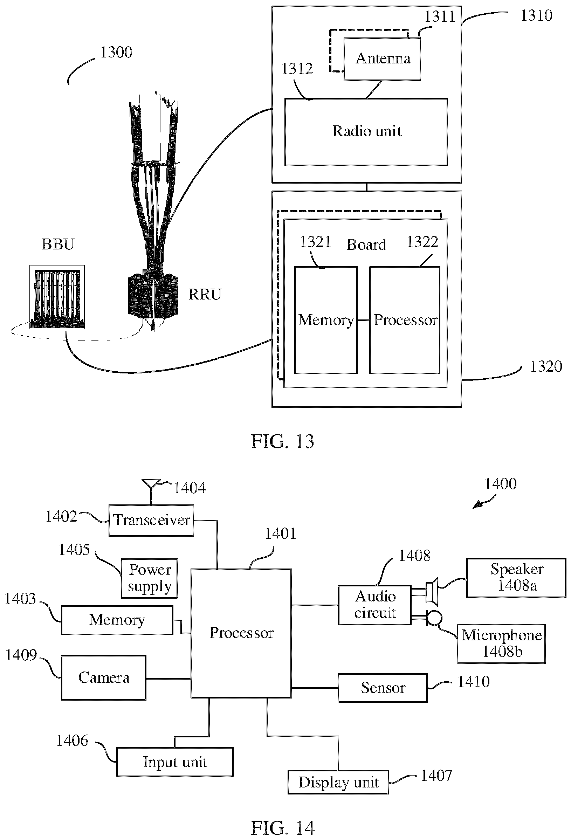

FIG. 13 is a diagram of a structure of a communication apparatus according to an embodiment of this application, for example, may be a diagram of a structure of a base station. The apparatus 1300 may perform a function of the network device in the foregoing method embodiments. As shown in FIG. 13, the apparatus 1300 may include one or more radio units, for example, a remote radio unit (remote radio unit, RRU) 1310 and one or more baseband units (BBUs) (which may also be referred to as a distributed unit (DU)) 1320. The RRU 1310 may be referred to as a transceiver unit, and corresponds to the transceiver unit 1110 in FIG. 11. Optionally, the RRU 1310 may also be referred to as a transceiver, a transceiver circuit, or the like, and may include at least one antenna 1311 and a radio unit 1312. Optionally, the RRU 1310 may include a receiving unit and a sending unit. The receiving unit may correspond to a receiver (or referred to as a receiver circuit), and the sending unit may correspond to a transmitter (or referred to as a transmitter circuit). The RRU 1310 is mainly configured to receive and send a radio frequency signal and perform conversion between the radio frequency signal and a baseband signal, for example, configured to send configuration information to a terminal device. The BBU 1320 is mainly configured to perform baseband processing, control the base station, and so on. The RRU 1310 and the BBU 1320 may be physically disposed together, or may be physically disposed separately, to be specific, in a distributed base station.

The BBU 1320 is a control center of the base station, may also be referred to as a processing unit, and may correspond to the processing unit 1120 in FIG. 11. The BBU 1320 is mainly configured to implement a baseband processing function, for example, channel coding, multiplexing, modulation, and spreading. For example, the BBU (the processing unit) may be configured to control the base station to execute an operation procedure of the network device in the foregoing method embodiments.

In an example, the BBU 1320 may include one or more boards, and a plurality of boards may jointly support a radio access network (for example, an LTE network) using a single access standard, or may separately support radio access networks (for example, an LTE network, a 5G network, or another network) using different access standards. The BBU 1320 further includes a memory 1321 and a processor 1322. The memory 1321 is configured to store necessary instructions and data. The processor 1322 is configured to control the base station to perform a necessary action, for example, is configured to control the base station to perform an operation procedure related to the network device in the foregoing method embodiments. The memory 1321 and the processor 1322 may serve the one or more boards. In other words, a memory and a processor may be disposed on each board. Alternatively, a plurality of boards may share a same memory and a same processor. In addition, a necessary circuit may be further disposed on each board.

It should be understood that the apparatus 1300 shown in FIG. 13 can implement the processes of the network device in the method embodiment shown in FIG. 5 or FIG. 6. Operations and/or functions of the modules in the apparatus 1300 are respectively for implementing corresponding procedures in the foregoing method embodiments. For details, refer to the descriptions in the foregoing method embodiments. To avoid repetition, detailed descriptions are properly omitted herein.

It should be further understood that the foregoing descriptions are provided by using an example in which the apparatus 1300 can implement the function of the network device in the embodiment shown in FIG. 5 or FIG. 6, but no limitation should not be constituted on this application. For example, the apparatus 1300 shown in FIG. 13 may alternatively be configured to implement a function of the terminal device in the embodiment shown in FIG. 5 or FIG. 6.

FIG. 14 is another diagram of a structure of a communication apparatus according to an embodiment of this application.

FIG. 14 is a diagram of a structure of a terminal device according to this embodiment of this application. The terminal device may be used in the system in FIG. 1 or FIG. 2. As shown in FIG. 14, the terminal device 1400 includes a processor 1401 and a transceiver 1402. Optionally, the terminal device 1400 further includes a memory 1403 The processor 1401, the transceiver 1402, and the memory 1403 may communicate with each other through an internal connection path, to transfer a control signal and/or a data signal. The memory 1403 is configured to store a computer program. The processor 1401 is configured to invoke the computer program from the memory 1403 and run the computer program, to control the transceiver 1402 to send/receive a signal. Optionally, the terminal device 1400 may further include an antenna 1404, configured to send, by using a radio signal, uplink data or uplink control signaling that is output by the transceiver 1402.

The processor 1401 and the memory 1403 may be integrated into one processing apparatus, and the processor 1401 is configured to execute program code stored in the memory 1403, to implement the foregoing function. During specific implementation, the memory 1403 may alternatively be integrated in the processor 1401, or independent of the processor 1401. The processor 1401 may correspond to the processing unit 1120 in FIG. 11 or the processor 1210 in FIG. 12.

The transceiver 1402 may correspond to the transceiver unit 1110 in FIG. 11 or the communication interface 1230 in FIG. 12. The transceiver 1402 may include a receiver (or referred to as a receiver or a receiver circuit) and a transmitter (or referred to as a transmitter or a transmitter circuit). The receiver is configured to receive a signal, and the transmitter is configured to transmit a signal.

Optionally, the terminal device 1400 may further include a power supply 1405, configured to supply power to various components or circuits in the terminal device 1400.

In addition, to improve the function of the terminal device, the terminal device 1400 may further include one or more of an input unit 1406, a display unit 1407, an audio circuit 1408, a camera 1409, a sensor 810, and the like. The audio circuit may further include a speaker 1408a, a microphone 1408b, and the like.

It should be understood that, the terminal device 1400 shown in FIG. 14 can implement the processes of the terminal device in the method embodiment shown in FIG. 3, FIG. 5, or FIG. 6. Operations and/or functions of the modules in the terminal device 1400 are respectively for implementing corresponding procedures in the foregoing method embodiments. For details, refer to the descriptions in the foregoing method embodiments. To avoid repetition, detailed descriptions are properly omitted herein. This application further provides a computer program product. The computer program product includes a computer program (which may also be referred to as code or instructions). When the computer program is run, a computer is enabled to perform the method performed by the communication device in the embodiment shown in FIG. 3, FIG. 5, or FIG. 6.

This application further provides a computer-readable storage medium. The computer-readable storage medium stores a computer program (which may also be referred to as code or instructions). When the computer program is run, a computer is enabled to perform the method performed by the communication device in the embodiment shown in FIG. 3, FIG. 5, or FIG. 6.

This application provides a communication system. The communication system includes a first communication device. The first communication device may be configured to perform the method performed by the communication device in the embodiment shown in FIG. 3, the method performed by the terminal device 1 and the terminal device 2 in the embodiment shown in FIG. 5, or the method performed by the terminal device 2 in the embodiment shown in FIG. 6.

Optionally, the communication system further includes a second communication device. The second communication device may be configured to implement the method performed by the base station in the embodiment shown in FIG. 5 or the method performed by the base station/terminal device 1 in the embodiment shown in FIG. 6.

Terms such as "unit" and "module" used in this specification may indicate computer-related entities, hardware, firmware, combinations of hardware and software, software, or software being executed.

A person of ordinary skill in the art may be aware that, in combination with illustrative logical blocks (illustrative logical blocks) and steps (steps) described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, the division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

When functions are implemented in a form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   obtaining mapping relationship information, wherein the mapping relationship information indicates a mapping relationship between at least one link and at least one group of timing values, and each group of timing values comprises at least one transmit timing value and/or at least one receive timing value;
   determining, based on a scheduled target link and the mapping relationship information, a timing value corresponding to the target link; and
   performing communication through the target link based on the timing value.

2. The method according to claim 1, wherein the obtaining mapping relationship information comprises:
   receiving the mapping relationship information, or determining the mapping relationship information.

3. The method according to claim 2, wherein the receiving the mapping relationship information comprises:
   receiving higher-layer signaling, wherein the higher-layer signaling carries the mapping relationship information.

4. The method according to claim 3, wherein the higher-layer signaling is scrambled by using a radio network temporary identifier RNTI of a communication device, and the communication device is a device that performs communication through the target link; or the higher-layer signaling is scrambled by using an RNTI of a communication device group, and the communication device group comprises a device that performs communication through any one of the at least one link.

5. The method according to claim 2, wherein the receiving the mapping relationship information comprises:
   receiving physical-layer signaling, wherein the physical-layer signaling carries the mapping relationship information.

6. The method according to claim 5, wherein the mapping relationship information indicates a mapping relationship between a plurality of links and a plurality of groups of timing values.

7. The method according to any one of claims 1 to 6, wherein when the mapping relationship information indicates the at least one link, the mapping relationship information comprises an index of the link and/or identifiers of a communication pair corresponding to the link, and the communication pair comprises a sending device and a receiving device.

8. The method according to any one of claims 1 to 7, wherein when the mapping relationship information indicates the at least one group of timing values, the mapping relationship information comprises at least one transmit timing value and/or at least one receive timing value.

9. The method according to any one of claims 1 to 7, wherein when the mapping relationship information indicates the at least one group of timing values, the mapping relationship information comprises an offset of each of at least one transmit timing value and/or at least one receive timing value relative to a timing value on a reference link.

10. The method according to claim 9, wherein the reference link is a link that has been synchronously accessed, and the reference link comprises a link between a terminal device and a network device or a link between terminal devices.

**11.** The method according to claim 9 or 10, wherein the method further comprises:
obtaining the timing value on the reference link.

**12.** The method according to any one of claims 8 to 11, wherein indication information that is in the mapping relationship information and that indicates the at least one group of timing values corresponds to a link type.

**13.** A communication method, comprising:

determining mapping relationship information, wherein the mapping relationship information indicates a mapping relationship between at least one link and at least one group of timing values, and each group of timing values comprises at least one transmit timing value and/or at least one receive timing value; and
sending the mapping relationship information.

**14.** The method according to claim 13, wherein the mapping relationship information is carried in higher-layer signaling.

**15.** The method according to claim 14, wherein the higher-layer signaling is scrambled by using a radio network temporary identifier RNTI of a communication device, and the communication device is a device that performs communication through a target link; or the higher-layer signaling is scrambled by using an RNTI of a communication device group, and the communication device group comprises a device that performs communication through any one of the at least one link.

**16.** The method according to claim 13, wherein the mapping relationship information is carried in physical-layer signaling.

**17.** The method according to claim 16, wherein the mapping relationship information indicates a mapping relationship between a plurality of links and a plurality of groups of timing values.

**18.** The method according to any one of claims 13 to 17, wherein when the mapping relationship information indicates the at least one link, the mapping relationship information comprises an index of the link and/or identifiers of a communication pair corresponding to the link, and the communication pair comprises a sending device and a receiving device.

**19.** The method according to any one of claims 13 to 18, wherein when the mapping relationship information indicates the at least one group of timing values, the mapping relationship information comprises at least one transmit timing value and/or at least one receive timing value.

**20.** The method according to any one of claims 13 to 18, wherein when the mapping relationship information indicates the at least one group of timing values, the mapping relationship information comprises an offset of each of at least one transmit timing value and/or at least one receive timing value relative to a timing value on a reference link.

**21.** The method according to claim 20, wherein the reference link is a link that has been synchronously accessed, and the reference link comprises a link between a terminal device and a network device or a link between terminal devices.

**22.** The method according to claim 20 or 21, wherein the method further comprises:
sending the timing value on the reference link.

**23.** The method according to any one of claims 20 to 22, wherein indication information that is in the mapping relationship information and that indicates the at least one group of timing values corresponds to a link type.

**24.** A communication apparatus, comprising a unit configured to implement the method according to any one of claims 1 to 23.

**25.** A communication apparatus, comprising a processor and a memory, wherein the memory is configured to store a computer program, and the processor is configured to execute the computer program, to enable the apparatus to implement the method according to any one of claims 1 to 23.

**26.** A computer-readable storage medium, wherein the computer-readable storage medium stores a computer program; and when the computer program is executed by a processor, the method according to any one of claims 1 to 23 is implemented.

27. A computer program product, comprising a computer program, wherein when the computer program is run, the method according to any one of claims 1 to 23 is implemented.

28. A communication apparatus, comprising at least one processor, wherein the processor is configured to perform the method according to any one of claims 1 to 12, or is configured to perform the method according to any one of claims 13 to 23.

29. The apparatus according to claim 28, further comprising a memory, wherein the memory is configured to store program instructions, and the processor is configured to execute the program instructions.

30. The apparatus according to claim 28 or 29, further comprising a communication interface, configured to communicate with another apparatus.

31. A communication system, comprising an apparatus configured to perform the method according to any one of claims 1 to 12 and an apparatus configured to perform the method according to any one of claims 13 to 23.

FIG. 1

FIG. 2

EP 4 503 496 A1

300

| Obtain mapping relationship information, where the mapping relationship information indicates a mapping relationship between at least one link and at least one group of timing values | 301 |

| Determine, based on a scheduled target link and the mapping relationship information, a timing value corresponding to the target link | 302 |

| Perform communication through the target link based on the timing value | 303 |

FIG. 3

36

| Link index | Transmit timing value |
|---|---|

(a)

| Link index | Transmit timing value | Receive timing value |
|---|---|---|

(b)

| Carrier index | Link index | Transmit timing value | Receive timing value |
|---|---|---|---|

(c)

| Communication pair 0 | Communication pair 1 | ... | Communication pair m−1 | Information block 0 | Information block 1 | ... | Information block m−1 |
|---|---|---|---|---|---|---|---|

(d)

| Communication pair 0 | Communication pair 1 | ... | Communication pair m−1 | Information block 0 | Information block 1 | ... | Information block m−1 | Timing information |
|---|---|---|---|---|---|---|---|---|

(e)

FIG. 4

500

| Base station | Terminal device 1 | Terminal device 2 |
|---|---|---|

S501: Determine mapping relationship information

S502: Mapping relationship information →

S502: Mapping relationship information →

S503: Determine a target link

S504: Scheduling information, for scheduling the target link →

S504: Scheduling information, for scheduling the target link →

S505: Determine, based on the target link and the mapping relationship information, a timing value corresponding to the target link

S505: Determine, based on the target link and the mapping relationship information, a timing value corresponding to the target link

S506: Perform communication through the target link ←→

**FIG. 5**

600

| Base station/Terminal device 1 | Terminal device 2 |
|---|---|

S601: Determine mapping relationship information

S602: Mapping relationship information →

S603: Determine a target link

S604: Scheduling information, for scheduling the target link →

S605: Determine, based on the target link and the mapping relationship information, a timing value corresponding to the target link

S606: Perform communication through the target link ←→

**FIG. 6**

Link 1a: Base station → Terminal device 1   Receive timing value   | n | | | | | | | | | | | | | ...

Offset 1

Link 1b: Terminal device 1 → Base station   Transmit timing value   | n | | | | | | | | | | | | ...

Link 3a: Terminal device 2 → Terminal device 1   Receive timing value   | n | | | | | | | | | | | | ...

Offset 2

Link 3b: Terminal device 1 → Terminal device 2   Transmit timing value   | n | | | | | | | | | | | | ...

FIG. 7

Link 1a: Base station → Terminal device 1  Receive timing value

Offset 1

Link 1b: Terminal device 1 → Base station  Transmit timing value

Offset 3

Link 3a: Terminal device 2 → Terminal device 1  Receive timing value

Offset 4

Link 3b: Terminal device 1 → Terminal device 2  Transmit timing value

FIG. 8

Link 1a: Base station → Terminal device 1   Receive timing value  n

Offset 1

Link 1b: Terminal device 1 → Base station   Transmit timing value  n

Offset 3

Link 3a: Terminal device 2 → Terminal device 1   Receive timing value  n

Offset 4

Link 3b: Terminal device 1 → Terminal device 2   Transmit timing value  n

FIG. 9

FIG. 10

EP 4 503 496 A1

Apparatus 1100

Transceiver unit
1110

Processing unit
1120

FIG. 11

Apparatus 1200

Processor 1210

Bus 1240

Memory 1220

Communication
interface 1230

FIG. 12

1310

1311

1312

1300

Antenna

Radio unit

BBU

RRU

1321  Board  1322

Memory — Processor

1320

FIG. 13

1404

1402  Transceiver

1405

1403

1409

1406

1401

1400

Power supply

Memory

Camera

Processor

Input unit

1408

Audio circuit

Speaker
1408a

Microphone
1408b

Sensor  1410

Display unit  1407

FIG. 14

## INTERNATIONAL SEARCH REPORT

| International application No. |
| --- |
| **PCT/CN2023/087497** |

**A. CLASSIFICATION OF SUBJECT MATTER**

H04L5/00(2006.01)i; H04W36/00(2009.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, CNKI, ENTXT, DWPI, 3GPP: 定时, timing, TA, path, link, 链路, 路径, 映射, 切换, switch, 对应, map, correspond, 业务, 连续, 无损, Service, Continuity, lossless, direct, D2I, I2D, 配置, 指示, 接收, 发送, config, indicate, signal, receive, transmit, send, 确定, determine, 参考, 参照, reference, URLLC

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020164514 A1 (HUAWEI TECHNOLOGIES CO., LTD.) 20 August 2020 (2020-08-20) description, page 5, line 3 to page 6, line 15, and page 31, line 26 to page 35, line 32 | 1-8, 13-19, 24-31 |
| Y | WO 2020164514 A1 (HUAWEI TECHNOLOGIES CO., LTD.) 20 August 2020 (2020-08-20) description, page 5, line 3 to page 6, line 15, and page 31, line 26 to page 35, line 32 | 9-11, 20-22 |
| Y | WO 2021162465 A1 (LG ELECTRONICS INC.) 19 August 2021 (2021-08-19) description, paragraph 183 | 9-11, 20-22 |
| A | EP 3499986 A1 (SUN PATENT TRUST) 19 June 2019 (2019-06-19) entire document | 1-31 |
| A | WO 2021008673 A1 (NOKIA TECHNOLOGIES OY) 21 January 2021 (2021-01-21) entire document | 1-31 |
| A | HUAWEI et al. "R2-2201511, Discussion on Service Continuity for L2 UE to NW Relay" *3GPP TSG-RAN WG2 Meeting #116bis-e*, 25 January 2022 (2022-01-25), entire document | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 July 2023** | **11 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/087497**

| Patent document cited in search report | | | Publication date (day/month/year) | Patent family member(s) | | | Publication date (day/month/year) |
|---|---|---|---|---|---|---|---|
| WO | 2020164514 | A1 | 20 August 2020 | US | 2021377892 | A1 | 02 December 2021 |
| | | | | EP | 3923501 | A1 | 15 December 2021 |
| | | | | EP | 3923501 | A4 | 06 July 2022 |
| | | | | KR | 20210125573 | A | 18 October 2021 |
| | | | | CN | 111585732 | A | 25 August 2020 |
| WO | 2021162465 | A1 | 19 August 2021 | JP | 2023514112 | A | 05 April 2023 |
| | | | | US | 2023065102 | A1 | 02 March 2023 |
| | | | | KR | 20220125274 | A | 14 September 2022 |
| EP | 3499986 | A1 | 19 June 2019 | EP | 3175657 | A1 | 07 June 2017 |
| | | | | EP | 3175657 | A4 | 14 March 2018 |
| | | | | EP | 3175657 | B1 | 27 February 2019 |
| | | | | US | 2017215160 | A1 | 27 July 2017 |
| | | | | US | 10187863 | B2 | 22 January 2019 |
| | | | | EP | 3499986 | B1 | 22 April 2020 |
| | | | | US | 2020314781 | A1 | 01 October 2020 |
| | | | | US | 11310755 | B2 | 19 April 2022 |
| | | | | RU | 2658663 | C1 | 22 June 2018 |
| | | | | US | 2019098592 | A1 | 28 March 2019 |
| | | | | US | 10708873 | B2 | 07 July 2020 |
| | | | | WO | 2016015350 | A1 | 04 February 2016 |
| | | | | MX | 2017000252 | A | 10 July 2017 |
| | | | | MX | 366002 | B | 24 June 2019 |
| | | | | JP | 2017535979 | A | 30 November 2017 |
| | | | | JP | 6601808 | B2 | 06 November 2019 |
| | | | | BR | 112016029977 | A2 | 22 August 2017 |
| | | | | BR | 112016029977 | A8 | 06 July 2021 |
| | | | | BR | 112016029977 | B1 | 14 February 2023 |
| | | | | KR | 20170038791 | A | 07 April 2017 |
| | | | | KR | 102217506 | B1 | 19 February 2021 |
| | | | | SG | 11201610524 | RA | 27 February 2017 |
| | | | | CN | 106576314 | A | 19 April 2017 |
| | | | | CN | 111711982 | A | 25 September 2020 |
| | | | | JP | 2020014242 | A | 23 January 2020 |
| WO | 2021008673 | A1 | 21 January 2021 | US | 2022248358 | A1 | 04 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210412217